# EUROPÄISCHE PATENTSCHRIFT

(11) **EP 3 452 276 B1**
(45) Veröffentlichungstag und Bekanntmachung des Hinweises auf die Patenterteilung: **01.03.2023**
(21) Anmeldenummer: 17724753.3
(22) Anmeldetag: 04.05.2017
(51) Int. Cl.: B30B 9/30, B64D 11/00, B64D 11/04

(54) **SYSTEM ZUM ABSAUGEN EINES FLUIDS SOWIE EIN FAHRZEUG MIT EINEM DERARTIGEN SYSTEM**
SYSTEM FOR EXTRACTING A FLUID BY SUCTION, AND A VEHICLE WITH A SYSTEM OF THIS TYPE
SYSTÈME D'ASPIRATION D'UN FLUIDE AINSI QUE VÉHICULE DOTÉ D'UN TEL SYSTÈME

(30) Priorität: 04.05.2016 DE 102016108361
(43) Veröffentlichungstag der Anmeldung: 13.03.2019
(73) Patentinhaber: Airbus Operations GmbH, 21129 Hamburg (DE)
(72) Erfinder: REISS, Matthias, 21129 Hamburg (DE); KEMPA, Michael, 21129 Hamburg (DE); LUTZER, Wilhelm, 21129 Hamburg (DE); KIEHNE, Oliver, 21129 Hamburg (DE); SPILLE, Marc, 20357 Hamburg (DE)
(74) Vertreter: LKGLOBAL Lorenz & Kopf PartG mbB Patentanwälte
(86) Internationale Anmeldenummer: PCT/EP2017/000553
(87) Internationale Veröffentlichungsnummer: WO 2017/190837

(56) Entgegenhaltungen:
- DE-C1- 19 639 123
- US-A- 3 275 393
- US-A- 4 444 099
- US-A1- 2012 217 343
- US-A1- 2013 345 651

## Beschreibung

### TECHNISCHES GEBIET

Die Erfindung betrifft ein System zum Absaugen eines Fluids sowie ein Fahrzeug mit einem derartigen System.

### HINTERGRUND DER ERFINDUNG

Systeme zum Absaugen eines Fluids sind grundsätzlich aus dem Stand der Technik bekannt. Ein derartiges System kann beispielsweise eine Fluidabsaugquelle aufweisen, die mit einem Fluidanschluss gekoppelt ist. Wird an den Fluidanschluss ein Fluidgegenanschluss gekoppelt, der wiederum mit einem Behälter verbunden ist, in dem Fluid gesammelt wurde, so kann die Fluidabsaugquelle dazu verwendet werden, das Fluid aus dem Behälter abzusaugen.

Das Dokument EP 2 949 459 A1 offenbart ein System mit einem Kabinenmonument eines Fahrzeugs und einem Trolley. Der Trolley kann in einen Aufnahmeraum des Kabinenmonuments geschoben werden. An einer innenseitigen Wand des Kabinenmonuments ist ein Fluidanschluss angeordnet. Der Fluidanschluss ist mit einer Fluidsaugquelle verbunden. Der Trolley weist an einer Seitenwand einen Fluidgegenanschluss auf. Der Fluidgegenanschluss ist mittels einer Fluidleitung mit einem Abfallbeutel in dem Trolley verbunden. Der Abfallbeutel kann zum Aufnehmen von Abfällen verwendet werden. Ist dies erfolgt, wird der Abfallbeutel verschlossen und der Trolley in den Aufnahmeraum des Kabinenmonuments geschoben, wobei der Fluidgegenanschluss des Trolleys mit dem Fluidanschluss des Kabinenmonuments gekoppelt wird. Daraufhin kann ein Absaugen von Fluid durch die beiden Anschlüsse und sodann aus dem Innenraum des Abfallbeutels erfolgen, um den Abfallbeutel sowie den darin gesammelten Abfall zu kompaktieren.

In der Praxis wurde festgestellt, dass die feste Anordnung von einem Fluidanschluss an dem Kabinenmonument und die feste Anordnung eines Fluidgegenanschlusses an dem Trolley den Nachteil haben kann, dass der Trolley besonders präzise in dem Aufnahmeraum des Kabinenmonuments platziert werden muss, um eine möglichst fluiddichte Verbindung zwischen dem Fluidanschluss des Kabinenmonuments und dem Fluidgegenanschluss des Trolleys gewährleisten zu können. In der Praxis ist es deshalb vorgesehen, dass der Trolley in dem Aufnahmeraum des Kabinenmonuments fixiert sein sollte, um sicherzustellen, dass die gewünschte, fluiddichte Verbindung zwischen dem Fluidanschluss des Kabinenmonuments und dem Fluidgegenanschluss des Trolleys auch während des Saugvorgangs fortwährend bestehen bleibt. Anderenfalls könnten unerwünschte Geräuschemissionen entstehen.

US 4 444 099 A offenbart eine Kompaktierungsvorrichtung zur Kompaktierung von Abfällen in einem Flugzeug. Die Vorrichtung weist einen Behälter zur Aufnahme von Abfällen und eine Vorrichtung, die durch Ausnutzung des Differenzdrucks zwischen der Kabine des Flugzeugs und seiner Umgebung Abfälle in dem Behälter kompaktiert, auf.

### ZUSAMMENFASSUNG DER ERFINDUNG

Der Erfindung liegt die Aufgabe zugrunde, ein System zum Absaugen von Fluid bereitzustellen, das eine besonders einfache Ankopplung an eine Vorrichtung, insbesondere einen Trolley, erlaubt, ohne dass es dafür einer genauen Positionierung der Vorrichtung bzw. des Trolleys bedarf.

Gemäß einem ersten Aspekt wird die Aufgabe gelöst durch ein System mit den Merkmalen des Anspruchs 1. Vorteilhafte Ausgestaltungen des Systems und bevorzugte Ausführungsformen sind in den zugehörigen Unteransprüchen und in der nachfolgenden Beschreibung wiedergegeben.

Vorgeschlagen wird ein System zum Absaugen eines Fluids. Das System weist ein Kabinenmonument für ein Fahrzeug, einen Schlauch mit einer ersten Fluidleitung, und einen Adapter mit einer Auslöseeinheit und einem Anschlussgehäuse auf. Das Anschlussgehäuse weist einen ersten Fluidanschluss auf, wobei der erste

Fluidanschluss des Anschlussgehäuses zur Ankopplung an einen ersten Fluidgegenanschluss ausgebildet ist. Das Kabinenmonument weist ein steuerbares Fluidhauptventil und eine erste Steuereinheit zum Steuern des Fluidhauptventils auf. Dabei ist ein erster Eingang des Fluidhauptventils zur zumindest indirekten Ankopplung an eine Fluidsaugquelle ausgebildet. Außerdem ist ein erstes Ende des Schlauchs derart mit dem Kabinenmonument verbunden, dass ein entsprechendes erstes Ende der ersten Fluidleitung zumindest indirekt mit einem ersten Ausgang des Fluidhauptventils fluidverbunden ist. Ein zweites Ende des Schlauchs ist derart mit dem Adapter verbunden, so dass ein entsprechendes zweites Ende der ersten Fluidleitung zumindest indirekt mit dem ersten Fluidanschluss fluidverbunden ist. Außerdem ist die erste Steuereinheit zum Steuern des Fluidhauptventils zumindest indirekt basierend auf einem von der Auslöseeinheit hervorgerufenen Auslösesignal ausgebildet.

Das System bietet den Vorteil, dass der Adapter mittels des Schlauchs mit dem Kabinenmonument gekoppelt ist. Der Adapter weist das Anschlussgehäuse mit dem ersten Fluidanschluss auf. Der Schlauch ist vorzugsweise elastisch und/oder flexibel verformbar. Soll der erste Fluidanschluss beispielsweise mit einem ersten Fluidgegenanschluss eines Trolleys verbunden werden, so kann der Trolley in die Nähe des Kabinenmonuments geschoben werden. Daraufhin kann der Adapter derart mit dem Trolley in Verbindung gebracht werden, dass eine Fluidverbindung zwischen dem ersten Fluidanschluss und dem ersten Fluidgegenanschluss entsteht. Zur einfacheren Handhabung weist der Adapter einen Handgriff auf. Der Trolley ist dabei nicht notwendigerweise an einer genau vorbestimmten Stelle zu dem Kabinenmonument zu platzieren. Denn der Schlauch erlaubt es, dass der Trolley beispielsweise nur in einem vorbestimmten Umgebungsbereich zu dem Kabinenmonument platziert werden muss. Der Umgebungsbereich kann durch eine Länge des Schlauchs vorbestimmt sein. Einer genauen Positionierung des Trolleys bedarf es deshalb nicht. Somit kann eine Kopplung zwischen dem Adapter und dem Trolley besonders einfach hergestellt werden, ohne dass es dafür einer besonders genauen Positionierung des Trolleys relativ zu dem Kabinenmonument bedarf.

Das Kabinenmonument ist vorzugsweise als ein Küchenkabinenmonument, insbesondere eines Flugzeugs, ausgestaltet. Der Schlauch erstreckt sich von dem Kabinenmonument zu dem Adapter. Weiterhin kann es vorgesehen sein, dass der Schlauch eine Schlauchhülle, beispielsweise aus einem Kunststoff, vorzugsweise aus einem faserverstärktem Kunststoff, umfasst, wobei sich die erste Fluidleitung durch einen Innenraum der Schlauchhülle erstreckt. Bevorzugt sind die Schlauchhülle und die erste Fluidleitung ebenfalls flexibel und/oder elastisch verformbar, insbesondere elastisch biegbar, ausgebildet.

Das erste Ende des Schlauchs ist mit dem Kabinenmonument verbunden. Die Verbindung kann dabei als lösbare Verbindung ausgebildet sein. So kann der Schlauch insbesondere zu Wartungszwecken von dem Kabinenmonument gelöst werden. Dabei ist es bevorzugt vorgesehen, dass ein zu dem ersten Ende des Schlauchs entsprechendes erstes Ende der ersten Fluidleitung mit dem ersten Ausgang des Fluidhauptventils fluidverbunden ist. Zwischen dem ersten Ende der ersten Fluidleitung und dem Ausgang des Fluidhauptventils soll also eine Fluidverbindung bestehen. Das Fluidhauptventil kann dabei nach Art eines Ventils zum Sperren, Freigeben und/oder Steuern eines Fluids durch das Ventil ausgebildet sein. Der erste Eingang des Fluidhauptventils kann mit einer Fluidsaugquelle gekoppelt, insbesondere fluidverbunden, sein. Wird von der Fluidsaugquelle ein Unterdruck bereitgestellt, so kann der entsprechende Unterdruck auch von der ersten Fluidleitung bereitgestellt werden, wenn das Fluidhauptventil geöffnet wird. Dazu ist die erste Steuereinheit vorgesehen, die zum Steuern des Fluidhauptventils ausgebildet ist. Die erste Steuereinheit kann also dazu ausgebildet sein, das Fluidhauptventil derart zu steuern, dass dieses durch entsprechende Steuersignale geöffnet oder geschlossen wird.

Das zweite Ende des Schlauchs ist mit dem Adapter verbunden. Die Verbindung kann dabei als lösbare Verbindung ausgebildet sein. So können der Schlauch und der Adapter insbesondere zu Wartungszwecken voneinander gelöst werden. Ein zu dem zweiten Ende des Schlauchs entsprechendes zweites Ende der ersten Fluidleitung ist bevorzugt mit dem ersten Fluidanschluss des Anschlussgehäuses des Adapters fluidverbunden. Zwischen dem zweiten Ende der ersten Fluidleitung und dem ersten Fluidanschluss soll eine Fluidverbindung bestehen. Wird der zuvor genannte Unterdruck durch Öffnen des Fluidhauptventils an die erste Fluidleitung angelegt, so kann der entsprechende Unterdruck auch durch den ersten Fluidanschluss bereitgestellt werden.

Um zu gewährleisten, dass ein von dem ersten Fluidanschluss bereitgestellter Unterdruck nur bei Bedarf, insbesondere dann, wenn der erste Fluidanschluss mit dem ersten Fluidgegenanschluss gekoppelt ist, bereitgestellt wird, weist der Adapter eine Auslöseeinheit auf. Dabei kann die Auslöseeinheit an oder neben dem Griff des Adapters angeordnet sein, um die Auslöseeinheit besonders einfach betätigen zu können. Durch Betätigen der Auslöseeinheit kann ein Auslösesignal von der Auslöseeinheit hervorgerufen, also vorzugsweise generiert, werden. Basierend auf dem Auslösesignal kann die Steuereinheit das Fluidhauptventil entsprechend steuern. Repräsentiert das Auslösesignal die Instruktion, einen Unterdruck an den ersten Fluidanschluss anzulegen, so kann dies von der Steuereinheit entsprechend ausgewertet werden, um ein entsprechendes Steuersignal an das Fluidhauptventil zu senden, so dass das Fluidhauptventil öffnet. Dadurch wird, sofern der erste Eingang des Fluidhauptventils zumindest indirekt mit der Fluidsaugquelle verbunden ist, ein entsprechender Unterdruck an den ersten Fluidanschluss angelegt.

Das zuvor erläuterte System bietet den Vorteil, dass der Adapter mit einem in der Nähe des Kabinenmonuments platzierten Trolleys derart in Verbindung bringbar ist, dass der erste Fluidanschluss des Adapters an den ersten Fluidgegenanschluss des Trolleys gekoppelt wird, um eine entsprechende Fluidverbindung herzustellen. Daraufhin kann der Auslösetaster betätigt werden, so dass das Fluidhauptventil öffnet, was das Anlegen eines Unterdrucks an den ersten Fluidanschluss bewirken kann. Aufgrund der Fluidverbindung zwischen dem ersten Fluidanschluss und dem ersten Fluidgegenanschluss wird der entsprechende Unterdruck auch an dem ersten Fluidgegenanschluss angelegt. Bei dem Trolley kann der entsprechende Unterdruck dazu verwendet werden, um ein Fluid, insbesondere Luft und/oder Flüssigkeit, aus dem Trolley abzusaugen. Dies kann vorzugsweise zum Kompaktieren des Abfallbehältnisses bzw. des Abfalls in dem Abfallbehältnis dienen. Ist dies erfolgt, kann beispielsweise durch ein erneutes Betätigen der Auslöseeinheit ein entsprechendes Auslösesignal an die erste Steuereinheit übertragen werden, so dass das Fluidhauptventil des Kabinenmonuments wieder schließt. Daraufhin kann der Adapter von dem Trolley entkoppelt werden. Das zuvor erläuterte System bietet deshalb eine besonders einfache und komfortable Handhabung, um Fluid von einem Trolley, der vorzugsweise stellvertretend für eine Vorrichtung steht, absaugen zu können.

In einer vorteilhaften Ausführungsform weist der Schlauch ferner eine erste Signalleitung auf, wobei ein zu dem ersten Ende des Schlauchs zugehöriges erstes Ende der ersten Signalleitung zumindest indirekt mit der ersten Steuereinheit signalverbunden ist und wobei ein dem zweiten Ende des Schlauchs entsprechendes zweites Ende der ersten Signalleitung zumindest indirekt mit der Auslöseeinheit signalverbunden ist.

Der Schlauch weist die erste Fluidleitung und die erste Signalleitung auf. Dabei kann der Schlauch von der ersten Fluidleitung und der ersten Signalleitung ausgebildet sein. Die erste Signalleitung kann sich durch den Innenraum der Schlauchhülle erstrecken. Bevorzugt ist die erste Signalleitung ebenfalls flexibel und/oder elastisch verformbar, insbesondere elastisch biegbar, ausgebildet.

Die Auslöseeinheit ist bevorzugt mit dem zu dem zweiten Ende des Schlauchs korrespondierenden zweiten Ende der ersten Signalleitung signalverbunden. Zwischen der Auslöseeinheit und dem zweiten Ende der ersten Signalleitung soll also eine Signalverbindung bestehen. Ein zu dem ersten Ende des Schlauchs korrespondierendes erstes Ende der Signalleitung ist bevorzugt mit der ersten Steuereinheit signalverbunden. Zwischen dem ersten Ende der ersten Signalleitung und der Steuereinheit des Kabinenmonuments soll also eine Signalverbindung bestehen. Wird nun ein Auslösesignal durch Betätigen der Auslöseeinheit hervorgerufen, wird dieses mittels der ersten Signalleitung an die Steuereinheit des Kabinenmonuments übertragen.

Eine vorteilhafte Ausgestaltung des Systems zeichnet sich dadurch aus, dass von dem Anschlussgehäuse ein bis auf eine Zugangsöffnung zumindest im Wesentlichen geschlossener Aufnahmeraum ausgebildet ist, und der erste Fluidanschluss an einer, insbesondere zu der Zugangsöffnung gegenüberliegenden, Wand des Aufnahmeraums angeordnet ist. Der Aufnahmeraum kann dabei zumindest im Wesentlichen von der zu der Zugangsöffnung gegenüberliegenden Wand und einer sich von dieser zu der Zugangsöffnung erstreckenden, zylinderförmigen Mantelwandung ausgebildet sein. Der Querschnitt der Mantelwandung ist dabei nicht notwendigerweise kreisförmig. Sofern der erste Fluidanschluss an der zu der Zugangsöffnung gegenüberliegenden Wand des Aufnahmeraums angeordnet ist, ist der erste Fluidanschluss nur aus dem Aufnahmeraum zugänglich. Mit anderen Worten ist der erste Fluidanschluss durch das Anschlussgehäuse vor möglichen Verschmutzungen und/oder Beschädigungen besonders effektiv geschützt. Um einen ersten Fluidgegenanschluss mit dem ersten Fluidanschluss zu koppeln, ist der erste Fluidgegenanschluss durch die Zugangsöffnung in den Aufnahmeraum einzuschieben, bis der erste Fluidgegenanschluss auf den ersten Fluidanschluss trifft, um die entsprechende Fluidverbindung zwischen dem ersten Fluidanschluss und dem ersten Fluidgegenanschluss herzustellen.

Eine weitere vorteilhafte Ausgestaltung des Systems zeichnet sich dadurch aus, dass das Anschlussgehäuse eine Führung, insbesondere mit mindestens einem Führungselement, mindestens einem Führungsstift und/oder mindestens einer Führungsbohrung, aufweist. Die Führung kann von dem Anschlussgehäuse selbst ausgebildet sein. So kann beispielsweise eine Führungsbohrung und/oder ein Führungsstift an der zu der Zugangsöffnung gegenüberliegenden Wand des Aufnahmeraums angeordnet und/oder ausgebildet sein. Alternativ oder ergänzend können Führungselemente vorgesehen sein. Diese Führungselemente können beispielsweise radial innenseitig an der Mantelwandung des Anschlussgehäuses angeordnet sein, die sich vorzugsweise von der zu der Zugangsöffnung gegenüberliegenden Wand zu der Zugangsöffnung erstreckt. So kann die Mantelwandung radial innenseitig mindestens eine Nut und/oder mindestens eine Schiene aufweisen, die als Führungselement des Anschlussgehäuses wirkt. Die Führung des Anschlussgehäuses dient vorzugsweise zum Führen eines Gegenadapters, der den ersten Fluidgegenanschluss aufweist. Der Gegenadapter kann dazu ausgebildet sein, um in den Aufnahmeraum des Anschlussgehäuses eingeschoben zu werden. Dabei ist der erste Fluidgegenanschluss vorzugsweise an einer Stirnseite des Gegenadapters angeordnet, so dass der erste Fluidgegenanschluss beim Einschieben des Gegenadapters in den Aufnahmeraum auf den ersten Fluidanschluss trifft. Weiterhin kann es vorgesehen sein, dass der Gegenadapter eine zu der Führung des Anschlussgehäuses korrespondierende Führung aufweist. Somit kann die Führung des Gegenadapters in die Führung des Anschlussgehäuses greifen, wenn der Gegenadapter in den Aufnahmeraum des Anschlussgehäuses geschoben wird. Das Anschlussgehäuse kann dazu ausgebildet sein, um den Gegenadapter in dem Aufnahmeraum lösbar zu halten und/oder lösbar zu fixieren. Dazu können Halte- und/oder Fixierungsmittel für das Anschlussgehäuse und/oder korrespondierende Halte- und/oder Fixierungsmittel für den Gegenadapter vorgesehen sein, so dass der Gegenadapter lösbar in dem Aufnahmeraum des Anschlussgehäuses gehalten bzw. fixiert werden kann. An dem Adapter, insbesondere an oder neben dem zugehörigen Griff, kann ein Betätigungselement angeordnet sein, das zum Lösen des Gegenadapters von dem Adapter ausgebildet ist.

Eine weitere vorteilhafte Ausgestaltung des Systems zeichnet sich dadurch aus, dass der Zugangsöffnung des Anschlussgehäuses eine sich selbsttätig schließende Klappe zugeordnet ist, die zwischen einer Öffnungsstellung und einer Schließstellung bewegbar, insbesondere verschwenkbar, ausgebildet ist. Die Klappe ist vorzugsweise derart ausgestaltet, dass sie die Zugangsöffnung in der Schließstellung zumindest im Wesentlichen verschließt. Außerdem ist die Klappe vorzugsweise in der Art ausgestaltet, dass sie die Zugangsöffnung in der Öffnungsstellung zumindest teilweise oder zumindest im Wesentlichen freigibt. Die Klappe kann dazu mittels eines Gelenks und/oder einer Linearführung an dem Anschlussgehäuse befestigt sein. So kann die Klappe beispielsweise mittels eines Drehgelenks an dem Anschlussgehäuse drehbar bzw. verschwenkbar befestigt sein. Außerdem kann ein Federmechanismus vorgesehen sein, der mit einer entsprechenden Federkraft auf die Klappe wirkt, so dass die Klappe selbsttätig in die Schließstellung bewegt bzw. verschwenkt wird. Um die Klappe in die Öffnungsstellung zu bewegen bzw. zu verschwenken, kann die Klappe von außen manuell aufgedrückt werden. Dies kann beispielsweise in der Weise erfolgen, dass der Gegenadapter von außen gegen die Klappe gedrückt wird, so dass sich die Klappe nach innen bewegt bzw. nach innen schwenkt und dadurch die Zugangsöffnung freigibt, so dass die Klappe in der Öffnungsstellung ist. Der der Gegenadapter kann daraufhin bis der zu der Zugangsöffnung gegenüberliegenden Wand des Aufnahmeraums geschoben werden, so dass der zweite Fluidgegenanschluss auf den ersten Fluidgegenanschluss trifft. Ist eine entsprechende Fluidverbindung zwischen dem ersten Fluidanschluss und dem zweiten Fluidgegenanschluss hergestellt, kann eine entsprechende Absaugung von Fluid erfolgen. Daraufhin kann der Gegenadapter wieder aus dem Aufnahmeraum herausgezogen werden. Mittels des Federmechanismus bewegt sich die Klappe bzw. schwenkt die Klappe dann wieder in die Schließstellung. Die zuvor erläuterte Klappe bietet den Vorteil, dass der Aufnahmeraum und/oder der erste Fluidanschluss vor Verschmutzungen und/oder Beschädigungen besonders effektiv geschützt ist. Sollte es bei einem Trennen des ersten Fluidanschlusses von dem ersten Fluidgegenanschluss zum Austreten von einer kleinen Menge von Flüssigkeit kommen, so kann der Aufnahmeraum des Anschlussgehäuses derart ausgestaltet sein, dass eine, insbesondere entsprechend kleine, Fluidmenge darin zurückgehalten werden kann. Dies verhindert effektiv, dass das Fluid ungehindert in die Umgebung gelangt. Dies ist besonders dann von Vorteil, wenn das Fluid ein Abwasser ist.

Eine weitere vorteilhafte Ausgestaltung des Systems zeichnet sich dadurch aus, dass der Adapter ein steuerbares Fluidnebenventil aufweist, das zwischen dem ersten Fluidanschluss des Anschlussgehäuses und dem zweiten Ende der Fluidleitung gekoppelt ist, und der Adapter eine zweite Steuereinheit zum Steuern des Fluidnebenventils aufweist, wobei die zweite Steuereinheit zum Steuern des Fluidnebenventils zumindest indirekt basierend auf einem von der Auslöseeinheit hervorgerufenen Auslösesignal ausgebildet ist. Das Fluidnebenventil kann dabei nach Art eines Ventils zum Sperren, Freigeben und/oder Steuern eines Fluids durch das Ventil ausgebildet sein. Dabei ist die zweite Steuereinheit vorzugsweise derart zum Steuern des Fluidnebenventils ausgebildet, um das Fluidnebenventil zu öffnen oder zu schließen. Wird von der Auslöseeinheit ein Auslösesignal hervorgerufen, kann dieses direkt oder zumindest indirekt an die zweite Steuereinheit übertragen werden. Dazu kann eine entsprechende Signalverbindung zwischen der Auslöseeinheit und der zweiten Steuereinheit vorgesehen sein. Alternativ oder ergänzend ist es möglich, dass das von der Auslöseeinheit hervorgerufene Auslösesignal zunächst zu der ersten Steuereinheit des Kabinenmonuments gesendet wird. Dabei kann es weiterhin vorgesehen sein, dass die erste Steuereinheit des Kabinenmonuments mit der zweiten Steuereinheit des Adapters mittels der ersten Signalleitung verbunden ist, so dass die erste Steuereinheit ein zu dem Auslösesignal entsprechendes Signal an die zweite Steuereinheit senden kann. Dieses Signal basiert also zumindest indirekt auf dem Auslösesignal der Auslöseeinheit. Wird die Auslöseeinheit nunmehr betätigt, was das entsprechende Auslösesignal hervorruft, kann das Fluidnebenventil mittels der zweiten Steuereinheit und das Fluidhauptventil mittels der ersten Steuereinheit geöffnet werden, so dass ein von der Fluidsaugquelle bereitgestellter Unterdruck an den ersten Fluidanschluss angelegt wird. Alternativ kann das Auslösesignal dazu dienen, das Fluidhauptventil und das Fluidnebenventil zu schließen. Das Fluidnebenventil bietet den Vorteil, dass eine fluidleitende Verbindung zwischen dem ersten Fluidanschluss und der ersten Fluidleitung in unmittelbarer Nähe zu dem ersten Fluidanschluss unterbrochen und/oder hergestellt werden kann. Wird bei einem Absaugen mittels des ersten Fluidanschlusses Flüssigkeit abgesaugt, so kann das Fluidnebenventil gewährleisten, dass das Fluidnebenventil nach dem Beenden des Absaugens geschlossen wird, um ein Rückströmen von Flüssigkeit durch den ersten Fluidanschluss effektiv zu verhindern oder auf ein Minimum zu reduzieren. Dies ist insbesondere dann von besonderem Vorteil, wenn mittels des ersten Fluidanschlusses Abwässer abgesaugt werden, wobei in diesem Fall zu verhindern ist, dass Abwässer durch den ersten Fluidanschluss zurückströmen und womöglich in die Umgebung gelangen können. Da das steuerbare Fluidnebenventil einen entsprechenden Rückstrom effektiv verhindert oder auf ein Minimum reduziert, kann ein Absaugen von Fluid, insbesondere Abwässern, mittels des Systems besonders hygienisch erfolgen.

Eine weitere vorteilhafte Ausgestaltung des Systems zeichnet sich dadurch aus, dass der Adapter einen Sensor, der zur Erkennung einer vorbestimmten Anordnung eines Fluidgegenanschlusses in dem Aufnahmeraum und/oder an dem ersten Fluidanschluss des Anschlussgehäuses ausgebildet ist, aufweist, wobei die erste Steuereinheit zum Steuern des Fluidhauptventils und/oder die zweite Steuereinheit zum Steuern des Fluidnebenventils jeweils zumindest indirekt basierend auf einem Sensorsignal des Sensors und auf einem von der Auslöseeinheit hervorgerufenen Auslösesignal ausgebildet sind bzw. ist. Vorzugsweise ist der Sensor an oder integral mit dem Anschlussgehäuse des Adapters ausgebildet. Der Adapter kann also zur Erkennung einer vorbestimmten Anordnung eines Fluidgegenanschlusses ausgebildet sein. Somit kann der Sensor erkennen, ob der Fluidgegenanschluss in dem Aufnahmeraum entsprechend einer vorbestimmten Anordnung platziert ist und/oder ob der Fluidgegenanschluss an dem ersten Fluidanschluss des Anschlussgehäuses angeordnet ist bzw. anliegt. Die Erkennung der vorbestimmten Anordnung des Fluidgegenanschlusses kann dabei indirekt erfolgen. Weist beispielsweise ein Gegenadapter den Fluidgegenanschluss auf, so kann der Sensor durch Erkennung des Gegenadapters auf die Anordnung des Fluidgegenanschlusses schließen und somit die Anordnung des Fluidgegenanschlusses erkennen. Die vorbestimmte Anordnung des Fluidgegenanschlusses zeichnet sich vorzugsweise dadurch aus, dass der Fluidgegenanschluss derart mit dem ersten Fluidanschluss gekoppelt ist, dass eine Fluidverbindung zwischen dem ersten Fluidanschluss und dem Fluidgegenanschluss ausgebildet ist. Vorzugsweise ist der Fluidgegenanschluss ein erster Fluidgegenanschluss. Liegt die vorbestimmte Anordnung des Fluidgegenanschlusses vor und wird diese von dem Sensor erkannt, kann der Sensor ein entsprechendes Sensorsignal an die erste und/oder zweite Steuereinheit senden. Damit wird der ersten und/oder zweiten Steuereinheit die Information übermittelt, dass die Fluidverbindung zwischen dem ersten Fluidanschluss und dem Fluidgegenanschluss hergestellt ist. Dies erlaubt sodann ein entsprechendes Absaugen von Fluid mittels des ersten Fluidanschlusses und des Fluidgegenanschlusses, ohne störende Absauggeräusche hervorzurufen. Damit das Absaugen nicht beginnt, bevor die Fluidverbindung zwischen dem ersten Fluidanschluss und dem Fluidgegenanschluss hergestellt ist, sind die erste und/oder zweite Steuereinheit dazu ausgebildet, das Fluidnebenventil bzw. das Fluidhauptventil erst dann zu öffnen, wenn das Sensorsignal des Sensors die zuvor genannte hergestellte Fluidverbindung zwischen dem ersten Fluidanschluss und dem Fluidgegenanschluss repräsentiert. Bezug nehmend auf die vorangegangenen Erläuterungen kann das Steuern des Fluidnebenventils bzw. das Fluidhauptventils außerdem von dem Auslösesignal der Auslöseeinheit abhängen. Wird von dem Sensor beispielsweise die entsprechende Fluidverbindung erkannt und entsprechend signalisiert, so erfolgt das Öffnen des Fluidnebenventils und/oder des Fluidhauptventils erst dann, wenn die Auslöseeinheit betätigt wird.

Eine weitere vorteilhafte Ausgestaltung des Systems zeichnet sich dadurch aus, dass das Anschlussgehäuse einen weiteren, zweiten Fluidanschluss aufweist, der zweite Fluidanschluss des Anschlussgehäuses zur Ankopplung an einen zweiten Fluidgegenanschluss ausgebildet ist, der zweite Fluidanschluss an der, insbesondere zu der Zugangsöffnung gegenüberliegenden, Wand des Aufnahmeraums angeordnet ist, ein erster Eingang des Fluidnebenventils zumindest indirekt mit dem zweiten Ende der ersten Fluidleitung fluidverbunden ist, ein erster Ausgang des Fluidnebenventils zumindest indirekt mit dem ersten Fluidanschluss fluidverbunden ist, ein zweiter Ausgang des Fluidnebenventils zumindest indirekt mit dem zweiten Fluidanschluss fluidverbunden ist, und das Fluidnebenventil derart steuerbar ausgebildet ist, dass der erste Eingang des Fluidnebenventils wahlweise mit dem ersten Ausgang des Fluidnebenventils oder dem zweiten Ausgang des Fluidnebenventils gekoppelt wird. Durch die zumindest indirekte Fluidverbindung zwischen dem ersten Eingang des Fluidnebenventils und dem zweiten Ende der ersten Fluidleitung kann ein von der Fluidsaugquelle bereitgestellter Unterdruck an den ersten Eingang des Fluidnebenventils angelegt werden. Außerdem ist eine zumindest indirekte Fluidverbindung zwischen dem ersten Ausgang des Fluidnebenventils und dem ersten Fluidanschluss vorgesehen. Wird das Fluidventil nun derart gesteuert, dass der erste Eingang des Fluidnebenventils mit dem ersten Ausgang des Fluidnebenventils gekoppelt ist, so kann ein von der Fluidsaugquelle bereitgestellter Unterdruck an den ersten Ausgang bzw. an den ersten Fluidanschluss angelegt werden. Weiterhin ist eine zumindest indirekte Fluidverbindung zwischen dem zweiten Ausgang des Fluidnebenventils und dem zweiten Fluidanschluss vorgesehen. Wird das Fluidventil nunmehr derart gesteuert, dass der erste Eingang des Fluidnebenventils mit dem zweiten Ausgang des Fluidnebenventils gekoppelt ist, so kann der von der Fluidsaugquelle bereitgestellter Unterdruck an den zweiten Ausgang des Fluidnebenventils bzw. an den zweiten Fluidanschluss angelegt werden. Besonders bevorzugt ist das Fluidventil nach Art eines Drei/Zwei-Wege-Ventils ausgebildet. So kann der erste Eingang des Fluidnebenventils wahlweise mit dem ersten oder dem zweiten Ausgang des Fluidnebenventils gekoppelt werden. Weiterhin kann es vorgesehen sein, dass das Fluidnebenventil derart steuerbar ist, dass keiner der Ausgänge mit dem ersten Eingang des Fluidnebenventils gekoppelt ist. Darüber hinaus ist es bevorzugt vorgesehen, dass die zweite Steuereinheit das Fluidnebenventil derart steuern kann, um den ersten Eingang des Fluidnebenventils mit dem ersten Ausgang des Fluidnebenventil, mit dem zweiten Ausgang des Fluidnebenventils oder mit keinem der Ausgänge des Fluidnebenventils zu koppeln. Indem das Anschlussgehäuse bevorzugt den ersten und zweiten Fluidanschluss aufweist, bietet der Adapter den Vorteil, dass mittels des Systems von unterschiedlichen Fluidgegenanschlüssen, also dem ersten Fluidgegenanschluss oder dem zweiten Fluidgegenanschluss, Fluid absaugbar ist. Bevorzugt weist der Gegenadapter den ersten und zweiten Fluidgegenanschluss auf. Wird der Gegenadapter in den Aufnahmeraum des Anschlussgehäuses des Adapters eingeschoben, ist es bevorzugt vorgesehen, dass der erste Fluidgegenanschluss eine Fluidverbindung zu dem ersten Fluidanschluss und der zweite Fluidgegenanschluss eine Fluidverbindung zu dem zweiten Fluidgegenanschluss ausbildet. Ist der Gegenadapter beispielsweise einem Trolley zum separaten Einsammeln von flüssigem Abfall und Feststoffabfall ausgebildet, so kann der erste Fluidgegenanschluss mit einer Flüssigkeitskammer des Trolleys zur Aufnahme von flüssigem Abfall und der zweite Fluidgegenanschluss mit einer Feststoffkammer des Trolleys zur Aufnahme von Feststoffabfall gekoppelt sein. In diesem Fall kann das Fluidnebenventil derart gesteuert werden, so dass zunächst der erste Ausgang des Fluidnebenventils mit dem ersten Eingang des Fluidnebenventils gekoppelt wird, um Flüssigkeit aus der Flüssigkeitskammer abzusaugen. Daraufhin kann das Fluidnebenventil derart gesteuert werden, dass der zweite Ausgang des Fluidnebenventils mit dem ersten Eingang des Fluidnebenventils gekoppelt wird, was ein Absaugen von Luft aus der Feststoffkammer hervorruft. Dazu kann die Feststoffkammer des Trolleys zuvor fluiddicht verschlossen sein. Ist dies erfolgt, kann das Absaugen von Luft aus der Feststoffkammer eine Kompaktierung des Feststoffabfalls in der Feststoffkammer bewirken. Ist die Absaugung der Luft bzw. die Kompaktierung des Feststoffabfalls abgeschlossen, kann das Fluidnebenventil derart gesteuert werden, dass keiner der Ausgänge des Fluidnebenventils mit dem ersten Eingang des Fluidnebenventils gekoppelt ist. Sodann kann der Adapter von dem Gegenadapter getrennt werden.

Eine vorteilhafte Ausgestaltung des Systems zeichnet sich dadurch aus, dass das Kabinenmonument eine Aufnahmevorrichtung zum lösbaren Aufnehmen des Adapters aufweist. Wurde der Adapter, wie zu der vorangegangenen Ausgestaltung erläutert, beispielsweise von dem Trolley getrennt, kann der Adapter sodann in die Aufnahmevorrichtung des Kabinenmonuments eingebracht oder eingesteckt werden. Die Aufnahmevorrichtung kann dazu nach Art einer Ausnehmung oder einer von außen zugänglichen Kammer durch das Kabinenmonument ausgebildet sein. Das Kabinenmonument bzw. die Aufnahmevorrichtung kann dazu ausgebildet sein, den Adapter lösbar zu halten und/oder zu fixieren. Somit wird effektiv verhindert, dass der Adapter aus der Aufnahmevorrichtung versehentlich herausfällt. Da der Adapter bevorzugt das Anschlussgehäuse mit dem ersten und/oder zweiten Fluidanschluss aufweist, bietet die Aufnahmevorrichtung des Kabinenmonuments einen besonders geeigneten Platz, um den Adapter vor Verschmutzungen, Beschädigungen und/oder ungewünschtem Zugriff zu schützen. So kann es vorgesehen sein, dass der Adapter derart lösbar von der Aufnahmevorrichtung aufnehmbar ist, dass der Aufnahmeraum des Anschlussgehäuses des Adapters von außen nicht zugänglich ist.

Eine vorteilhafte Ausgestaltung des Systems zeichnet sich dadurch aus, dass das Kabinenmonument eine Spülvorrichtung zum Spülen des Anschlussgehäuses, insbesondere des zugehörigen Aufnahmeraums, aufweist. Die Spülvorrichtung kann beispielsweise mindestens eine Sprühdüse aufweisen, die zum Ausbringen von Spülflüssigkeit in den Aufnahmeraum des Anschlussgehäuses ausgebildet ist. Besonders bevorzugt ist die Spülvorrichtung der Aufnahmevorrichtung zugeordnet und/oder mit dieser integral ausgebildet. In diesem Fall kann der Adapter in die Aufnahmevorrichtung derart eingebracht werden, dass dieser dort lösbar gehalten und/oder fixiert wird und der Adapter derart zu der Spülvorrichtung angeordnet ist, dass eine Spülung durch Ausbringen von Spülflüssigkeit in den Aufnahmeraum des Anschlussgehäuses erfolgen kann. Besonders bevorzugt kann der Adapter nach jedem Gebrauch zum Absaugen von Fluid wieder in die Aufnahmevorrichtung eingebracht werden, so dass daraufhin die Spülung des Aufnahmeraums erfolgen kann. Die Verwendung des Adapters ist in diesem Fall besonders hygienisch, denn mögliche Tropfmengen von abgesaugter Flüssigkeit, die sich möglicherweise in dem Aufnahmeraum gesammelt haben, können durch den Spülvorgang entfernt werden.

Eine weitere vorteilhafte Ausgestaltung des Systems zeichnet sich dadurch aus, dass das Kabinenmonument eine Schlauchrückholvorrichtung für den Schlauch aufweist, die zum selbsttätigen Rückholen, insbesondere Aufwickeln, des Schlauchs ausgebildet ist. Diese Ausgestaltung bietet den Vorteil, dass der Schlauch nach dem Absaugen von Fluid mittels der Schlauchrückholvorrichtung in oder an das Kabinenmonument zurückgeholt werden kann, so dass der Schlauch während einer Phase, in das System nicht zum Absaugen von Fluid verwendet wird, kein Hindernis in unmittelbarer Nähe des Kabinenmonuments darstellt. Eine besonders vorteilhafte Ausgestaltung der Schlauchrückholvorrichtung ist nach Art einer Schlauchaufwickelvorrichtung ausgestaltet, die zum selbsttätigen Aufwickeln des Schlauchs ausgebildet ist. Bei Bedarf kann der Schlauch deshalb abgewickelt werden, so dass der Adapter mit einem Gegenadapter in Verbindung gebracht werden kann, um einen Fluidabsaugvorgang zu starten. Daraufhin kann der Adapter von dem Gegenadapter getrennt werden, so dass der Schlauch, der sich von dem Kabinenmonument bis zu dem Adapter erstreckt, von der Schlauchaufwickelvorrichtung wieder eingezogen und dabei aufgewickelt werden kann.

Eine vorteilhafte Ausgestaltung des Systems zeichnet sich dadurch aus, dass das Fluidnebenventil einen zweiten Eingang aufweist, der zumindest indirekt mit einem Entlüftungsanschluss des Adapters fluidverbunden ist, und das Fluidnebenventil derart steuerbar ausgebildet ist, dass der zweite Eingang des Fluidnebenventils in umgekehrter Weise zu dem ersten Eingang des Fluidnebenventils mit dem ersten Ausgang des Fluidnebenventils oder dem zweiten Ausgang des Fluidnebenventils gekoppelt wird. Durch die Fluidverbindung zwischen dem Entlüftungsanschluss des Adapters und dem zweiten Eingang des Fluidnebenventils kann durch den Entlüftungsanschluss Luft aus der Umgebung des Adapters zu dem zweiten Eingang strömen. Dabei ist der zweite Eingang des Fluidnebenventils mit dem zweiten Ausgang des Fluidnebenventils gekoppelt, wenn der erste Eingang des Fluidnebenventils mit dem ersten Ausgang des Fluidnebenventils gekoppelt ist. Außerdem ist vorgesehen, dass der zweite Eingang des Fluidnebenventils mit dem ersten Ausgang des Fluidnebenventils gekoppelt ist, wenn der erste Eingang des Fluidnebenventils mit dem zweiten Ausgang des Fluidnebenventils gekoppelt ist. Vorzugsweise ist das Fluidnebenventil nach Art eines 4/2-Wegeventils ausgebildet. Vorzugsweise ist die zweite Steuereinheit dazu ausgebildet, das Fluidnebenventil wie zuvor erläutert zu steuern. Außerdem kann es vorgesehen sein, dass das Fluidnebenventil derart steuerbar ist, dass keiner der Ausgänge mit keinem der Eingänge gekoppelt ist. Die zuvor genannte Ausgestaltung des Systems bietet den Vorteil, dass Fluid absaugbar ist und im Gegenzug Umgebungsluft bereitstellbar ist. Dies kann beispielsweise dann von Vorteil sein, wenn der Gegenadapter einem Trolley mit einer pneumatischen Kompaktierungsvorrichtung zugeordnet ist, wobei die Kompaktierungsvorrichtung zum Kompaktieren von in dem Trolley gesammelten Abfall sowohl einen Unterdruck als auch Umgebungsluft benötigt.

Eine vorteilhafte Ausgestaltung des Systems zeichnet sich dadurch aus, dass das System einen Trolley mit einer pneumatischen Kompaktierungsvorrichtung aufweist, wobei der Trolley einen Abfallbeutelaufnahmeraum aufweist, in dem ein Abfallbeutel zum Einsammeln von Abfall angeordnet ist, und wobei der Trolley den ersten Fluidgegenanschluss aufweist, der zumindest indirekt mit der Kompaktierungsvorrichtung fluidverbunden ist. Durch die Fluidverbindung zwischen dem ersten Fluidgegenanschluss und der Kompaktierungsvorrichtung kann der Kompaktierungsvorrichtung ein Unterdruck bereitgestellt werden, wenn der erste Fluidgegenanschluss in Fluidverbindung mit dem ersten Fluidanschluss gebracht wird. Vorzugsweise ist die Kompaktierungsvorrichtung dazu ausgebildet, den Abfallbeutel und/oder den Abfall in dem Abfallbeutel zu kompaktieren, wenn der pneumatischen Kompaktierungsvorrichtung ein Unterdruck bereitgestellt wird. In einer Ausgestaltungsvariante kann die Kompaktierungsvorrichtung einen Kompaktierungsbeutel aufweisen, der den Abfallbeutelaufnahmeraum bildet, und wobei der Kompaktierungsbeutel luftdicht bis auf einen Beutelanschluss verschließbar ist, wobei der Beutelanschluss in Fluidverbindung mit dem ersten Fluidgegenanschluss ausgebildet ist. Wird nun ein Unterdruck an den ersten Fluidgegenanschluss angelegt, wird Fluid, insbesondere Luft, aus dem Kompaktierungsbeutel abgesaugt, so dass sich der Innenraum des Kompaktierungsbeutels verkleinert und dabei zu einer Verdichtung und/oder Kompaktierung des Abfallbeutels und damit auch zu einer Kompaktierung des eingesammelten Abfalls in dem Abfallbeutel führt. Weitere mögliche Ausgestaltungen der pneumatischen Kompaktierungsvorrichtung sind denkbar und möglich.

Eine vorteilhafte Ausgestaltung des Systems zeichnet sich dadurch aus, dass die Kompaktierungsvorrichtung einen pneumatisch aus- und einfahrbaren Faltenbalg zum Kompaktieren des Abfallbeutels aufweist, wobei der Trolley mittels der Kompaktierungsvorrichtung dazu ausgebildet ist, den Faltenbalg zur Kompaktierung des Abfallbeutels auszufahren, wenn ein Unterdruck an dem ersten Fluidgegenanschluss anliegt. Dazu kann die Kompaktierungsvorrichtung einen Deckel aufweisen, an dessen Unterseite der Faltenbalg angeordnet ist. Wird der Deckel derart mit dem Abfallbeutelaufnahmeraum in Verbindung gebracht, dass der Deckel den Abfallbeutelaufnahmeraum bis auf einen Absaugkanal in dem Deckel fluiddicht abschließt, wobei der Absaugkanal radial außenseitig zu dem Faltenbalg angeordnet ist und mit dem ersten Fluidgegenanschluss in Fluidverbindung ist, so kann durch ein Anlegen eines Unterdrucks an den ersten Fluidgegenanschluss Luft und/oder Fluid aus dem Abfallbeutelaufnahmeraum abgesaugt werden. Dies ruft eine Kraft auf den Faltenbalg hervor, die zu einem Ausfahren des Faltenbalgs führt. Wird der Faltenbalg ausgefahren, trifft dieser auf den Abfallbeutel und kompaktiert diesen sowie den darin eingesammelten Abfall.

Eine weitere vorteilhafte Ausgestaltung des Systems zeichnet sich dadurch aus, dass der Trolley den zweiten Fluidgegenanschluss aufweist, der zumindest indirekt mit der Kompaktierungsvorrichtung fluidverbunden ist, und der Trolley mittels der Kompaktierungsvorrichtung dazu ausgebildet ist, den Faltenbalg einzufahren, wenn ein Unterdruck an dem zweiten Fluidgegenanschluss anliegt.

Eine vorteilhafte Ausgestaltung des Systems zeichnet sich dadurch aus, dass der Trolley den zweiten Fluidgegenanschluss aufweist, der zumindest indirekt mit einem Faltenbalginnenraum des Faltenbalgs fluidverbunden ist. Wird das Fluidnebenventil beispielsweise derart gesteuert, dass ein Unterdruck an dem ersten Fluidgegenanschluss anliegt und der zweite Fluidgegenanschluss mit der Umgebungsluft verbunden ist, so kann Umgebungsluft in den Faltenbalginnenraum einströmen, wenn der Faltenbalg ausgefahren wird. Wird das Fluidnebenventil hingegen derart gesteuert, dass ein Unterdruck an dem zweiten Fluidgegenanschluss anliegt und der erste Fluidgegenanschluss mit der Umgebungsluft gekoppelt ist, so kann Luft aus dem Faltenbalginnenraum abgesaugt werden, so dass in dem Faltenbalginnenraum ein Unterdruck entsteht. Dies ruft eine Kraft auf den Falkenbalg hervor, die das Einfahren des Faltenbalgs bewirkt. Korrespondierend hierzu kann Umgebungsluft durch den ersten Fluidgegenanschluss in den Abfallbeutelaufnahmeraum strömen, so dass der Faltenbalg besonders einfach einfahrbar ist.

Gemäß einem weiteren Aspekt der Erfindung wird die eingangs genannte Aufgabe mit einem Fahrzeug, insbesondere einem Flugzeug, gelöst, wobei das Fahrzeug ein System aufweist, wie es zuvor beschrieben wurde.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Fig. 1: zeigt eine beispielhafte Ausgestaltung des Systems in einer schematischen Darstellung.
- Fig. 2: zeigt eine beispielhafte Ausgestaltung des Adapters in einer schematischen, halbtransparenten Darstellung.
- Fig. 3: zeigt eine weitere, beispielhafte Ausgestaltung des Systems in einer schematischen Darstellung.
- Fig. 4: zeigt eine weitere, beispielhafte Ausgestaltung des Systems in einer schematischen Darstellung.
- Fig. 5: zeigt eine weitere, beispielhafte Ausgestaltung des Systems in einer schematischen Darstellung.
- Fig. 6: zeigt eine weitere, beispielhafte Ausgestaltung des Systems in einer schematischen Darstellung.

### DETAILLIERTE DARSTELLUNG EXEMPLARISCHER AUSFÜHRUNGSFORMEN

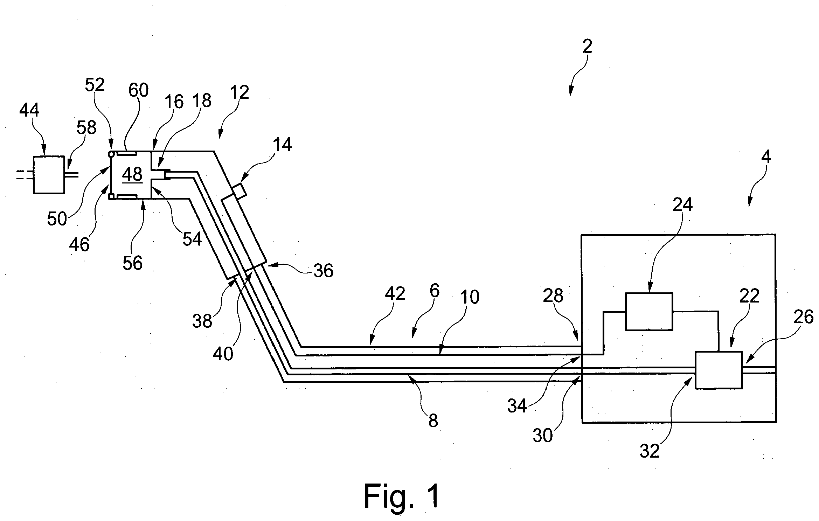

In der Fig. 1 ist eine vorteilhafte Ausgestaltung des Systems 2 schematisch dargestellt. Das System 2 dient zum Absaugen von Fluid. Das System 2 weist ein Kabinenmonument 4 auf. Das Kabinenmonument 4 kann beispielsweise ein Küchenkabinenmonument, insbesondere eines Flugzeugs, sein. Außerdem weist das System 2 einen Schlauch 6 auf, der eine erste Fluidleitung 8 und eine erste Signalleitung 10 umfasst. Der Schlauch 6 kann dazu eine Schlauchhülle 42 umfassen, durch die sich die erste Fluidleitung 8 und die erste Signalleitung 10 erstrecken. Alternativ kann es vorgesehen sein, dass der Schlauch 6 von der ersten Fluidleitung 8 und der ersten Signalleitung 10 zumindest teilweise gebildet wird. Der Schlauch 6, und somit die erste Fluidleitung 8 und die erste Signalleitung 6, erstrecken sich von einem Adapter 12 des Systems 2 zu dem Kabinenmonument 4. Der Adapter 12 dient zum Ankoppeln an einen Gegenadapter 44, der in Fig. 1 schematisch dargestellt ist. Der Gegenadapter 4 kann einer weiteren Vorrichtung (nicht dargestellt) zugeordnet sein. Der Adapter 12 des Systems 2 weist ein Anschlussgehäuse 16 mit einem ersten Fluidanschluss 18 auf. Das Anschlussgehäuse 16 kann dazu einen bis auf eine Zugangsöffnung 46 zumindest im Wesentlichen geschlossenen Aufnahmeraum 48 ausbilden. Dabei ist der Zugangsöffnung 46 vorzugsweise eine sich selbsttätig schließende Klappe 50 zugeordnet. Die Klappe 50 kann mittels eines Drehgelenks 52 an einem zugangsöffnungsseitigen Ende des Anschlussgehäuses 16 drehbar gelagert befestigt sein. Somit ist die Klappe 50 zwischen einer Schließstellung, in der die Klappe 50 die Zugangsöffnung 46 zumindest im Wesentlichen verschließt, und einer Öffnungsstellung, in der die Klappe 50 die Zugangsöffnung 46 zumindest teilweise freigibt, verschwenkbar. In der Fig. 1 ist der Fall gezeigt, in dem die Klappe 50 in der Schließstellung ist. Außerdem ist es bevorzugt vorgesehen, dass der erste Fluidanschluss 18 an einer zu der Zugangsöffnung 46 gegenüberliegenden Wand 54 des Aufnahmeraums 48 angeordnet ist. Um den Aufnahmeraum 48 zu bilden, erstreckt sich vorzugsweise eine weitere, zylinderförmige Wandung 56, die auch als Mantelwandung 56 bezeichnet wird, von der zuvor genannten Wand 54 bis zu der Zugangsöffnung 46.

Um den Gegenadapter 44 mit dem Adapter 12 in Verbindung zu bringen, wird der Gegenadapter 44 in den Aufnahmeraum 48 geschoben. Dabei trifft der Gegenadapter 44 zunächst auf die Klappe 50 und drückt diese auf. Vorzugsweise ist dem Drehgelenk 52 ein Federmechanismus zugeordnet, der dazu ausgebildet ist, die Klappe 50 bevorzugt in der Schließstellung zu halten. Allerdings kann die Klappe aufgrund des Federmechanismus auch in die Öffnungsstellung aufgeschwenkt, was durch das Einschieben des Gegenadapters 44 in den Aufnahmeraum 48 ermöglicht wird. Der Gegenadapter 44 weist vorzugsweise einen ersten Fluidgegenanschluss 58 auf. Der erste Fluidanschluss 18 des Adapters 12 ist vorzugsweise derart ausgebildet, dass der erste Fluidgegenanschluss 58 mit dem ersten Fluidanschluss 18 koppelbar ist. Dies erfolgt, wenn der Gegenadapter 44 mit dem ersten Fluidgegenanschluss 58 voran in den Aufnahmeraum 48 bis zu der Wand 54 bzw. dem ersten Fluidanschluss 18 geschoben wird. Dadurch erfolgt die Kopplung zwischen dem ersten Fluidanschluss 18 und dem ersten Fluidgegenanschluss 58; so dass eine entsprechende Fluidverbindung entsteht.

Außerdem ist es vorgesehen, dass der Adapter 12 mittels des Schlauchs 6 mit dem Kabinenmonument 4 gekoppelt ist. Dabei ist ein erstes Ende 28 des Schlauchs 6 derart mit dem Kabinenmonument 4 gekoppelt, dass ein entsprechendes erstes Ende 30 der ersten Fluidleitung 18 zumindest indirekt mit einem ersten Ausgang 32 eines Fluidhauptventils 22 des Kabinenmonuments 4 fluidverbunden ist. Zur Herstellung der entsprechenden Fluidverbindung kann eine weitere Fluidleitung vorgesehen sein, die sich von dem Ausgang 32 des Fluidhauptventils 22 zu dem ersten Ende 30 der ersten Fluidleitung 8 erstreckt. Ein erster Eingang 26 des Fluidhauptventils 22 kann zumindest indirekt mit einer Fluidabsaugquelle (nicht dargestellt) verbunden sein. Die Fluidabsaugquelle kann vorzugsweise dem Kabinenmonument 44 zugeordnet sein. Alternativ ist es möglich, dass die Fluidabsaugquelle dem Fahrzeug zugeordnet ist. Von der Fluidabsaugquelle kann ein Unterdruck bereitgestellt werden. Öffnet das Fluidhauptventil 22, so kann ein entsprechender Unterdruck auch an die erste Fluidleitung 8 weitergegeben werden. Dabei ist es vorgesehen, dass ein zweites Ende 36 des Schlauchs 6 derart mit dem Adapter 12 verbunden ist, so dass ein entsprechendes zweites Ende 38 der ersten Fluidleitung 8 zumindest indirekt mit dem ersten Fluidanschluss 18 fluidverbunden ist. Hierzu kann der Adapter 12 zumindest eine weitere Fluidleitung aufweisen, die sich von dem ersten Fluidanschluss 18 zu dem zweiten Ende 38 der ersten Fluidleitung 8 erstreckt. Wird der zuvor genannte Unterdruck an die erste Fluidleitung 8 angelegt, so kann mittels der zuvor genannte Fluidverbindung zwischen der ersten Fluidleitung 8 und dem ersten Fluidanschluss 18 ein entsprechender Unterdruck an den ersten Fluidanschluss 18 angelegt werden. Ist der erste Fluidanschluss 18 mit dem ersten Fluidgegenanschluss 58 gekoppelt, so kann der genannte Unterdruck dem Gegenadapter 44 bereitgestellt werden, um von diesem Fluid abzusaugen.

Ein dauerhaftes Anlegen eines Unterdrucks an den ersten Fluidanschluss 18 ist jedoch nicht von Vorteil. Dies verursacht einen entsprechenden Leistungsbedarf und würde zudem unangenehme Geräusche hervorrufen. Um einen entsprechenden Unterdruck nur bei Bedarf an die erste Fluidleitung 8 anzulegen, ist das Fluidhauptventil 22 des Kabinenmonuments 4 vorgesehen. Außerdem weist das Kabinenmonument 4 eine erste Steuereinheit 24 auf, die zur Steuerung des Fluidhauptventils 22 ausgebildet ist. Die erste Steuereinheit 24 kann dazu mittels einer Signalleitung mit dem Fluidhauptventil 22 verbunden sein, um an dieses entsprechende Steuersignale zu übertragen, was eine Steuerung des Fluidhauptventils 22 mittels der ersten Steuereinheit 24 ermöglicht.

Um den Bedarf eines Unterdrucks zu signalisieren, weist der Adapter 12 eine Auslöseeinheit 14 auf. Dabei ist das zweite Ende des Schlauchs 6 derart mit dem Adapter 12 verbunden, dass ein entsprechendes zweites Ende 40 der ersten Signalleitung 10 zumindest indirekt mit der Auslöseeinheit 14 signalverbunden ist. In einer vorteilhaften Ausgestaltung erstreckt sich eine weitere Signalleitung von der Auslöseeinheit 14 zu dem zweiten Ende 40 der ersten Signalleitung 10. Außerdem ist es vorgesehen, dass das erste Ende 28 des Schlauchs 6 derart mit dem Kabinenmonument 4 verbunden ist, dass ein entsprechendes erstes Ende 34 der ersten Signalleitung 10 zumindest indirekt mit der ersten Steuereinheit 24 des Kabinenmonuments 4 signalverbunden ist. Dazu kann das Kabinenmonument 4 eine weitere Signalleitung aufweisen, die sich von dem ersten Ende 34 der ersten Signalleitung 10 zu der ersten Steuereinheit 24 erstreckt. Wird die Auslöseeinheit 14 betätigt, kann die dazu ausgebildet sein, ein entsprechendes Auslösesignal hervorzurufen, das mittels der zuvor genannten Signalverbindung zwischen der Auslöseeinheit 14 und der ersten Steuereinheit 24 an diese übertragen wird. Somit erhält die erste Steuereinheit 24 die Information darüber, dass beispielsweise ein Unterdruck an die erste Fluidleitung 8 anzulegen ist. Daraufhin steuert die erste Steuereinheit 24 das Fluidhauptventil 22 des Kabinenmonuments 24 entsprechend, so dass das Fluidhauptventil 22 öffnet. Somit erlaubt das zuvor erläuterte System 2 ein Absaugen von Fluid.

Das System 2 bietet den Vorteil, dass der Adapter 12 besonders einfach und flexibel handhabbar ist. Denn der Adapter 12 ist nicht unmittelbar mit dem Kabinenmonument 4 angeordnet, sondern zwischen dem Kabinenmonument 4 und dem Adapter 12 erstreckt sich der Schlauch 6. Der Schlauch 6, und insbesondere die zugehörige, erste Fluidleitung 8 sowie die zugehörige, erste Signalleitung 10, sind vorzugsweise elastisch verformbar und/oder verbiegbar ausgebildet. Somit kann der Adapter 12 in einem von der Schlauchlänge des Schlauchs 6 vorbestimmten Bereichs im Wesentlichen frei bewegt werden. Soll der Adapter 12 nun mit dem Gegenadapter 44 gekoppelt werden, der vorzugsweise einem Wagen, insbesondere einem Trolley, zugeordnet ist, so ist der Wagen, bzw. der Trolley, mit dem Gegenadapter 44 in die Nähe des Kabinenmonuments 4 zu bringen. Eine exakte Positionierung des Wagens, bzw. des Trolleys, ist nicht notwendig, da der Adapter 12, wie zuvor erläutert, relativ zu dem Kabinenmonument 4 bewegt werden kann. Somit kann der Adapter 12 auf den Gegenadapter 44 aufgesteckt werden, indem der Gegenadapter 44 in den Aufnahmeraum 48 einfasst. Daraufhin kann das Absaugen von Fluid erfolgen, indem die Auslöseeinheit 14 betätigt wird. Ist das Absaugen von Fluid beendet, kann die Auslöseeinheit 14 erneut betätigt werden, um das Hauptventil 22 zu schließen, so dass der Adapter 12 von dem Gegenadapter 44 getrennt werden kann. Mit dem Abziehen des Adapters 12 von dem Gegenadapter 44 schließt sich die Klappe 50 selbsttätig, so dass effektiv verhindert wird, dass möglicherweise austretende Kleinmengen von abgesaugtem Fluid in die Umgebung gelangt. Außerdem wird damit effektiv verhindert, dass die Person, die den Adapter 12 und/oder die Auslöseeinheit 14 handhabt, versehentlich mit der genannten Kleinmenge an Fluid in Kontakt kommt.

Außerdem ist es bevorzugt vorgesehen, dass das Anschlussgehäuse 16 eine Führung 60 aufweist. Die Führung 60 dient zum Führen des Gegenadapters 44. Der Gegenadapter 44 kann eine dazu korrespondierend ausgebildete Führung aufweisen, so dass die Führungen 60 ineinandergreifen, wenn der Gegenadapter 44 in dem Aufnahmeraum 48 geschoben wird. Die Führung 60 des Anschlussgehäuses 16 kann durch radial innenseitig an der Mantelwandung 56 angeordnete Führungselemente ausgebildet sein. Andere Führungselemente, wie beispielsweise Führungsstifte und/oder Führungsbohrungen, können ebenfalls oder alternativ vorgesehen sein, um die Führung 60 des Anschlussgehäuses 16 zu bilden.

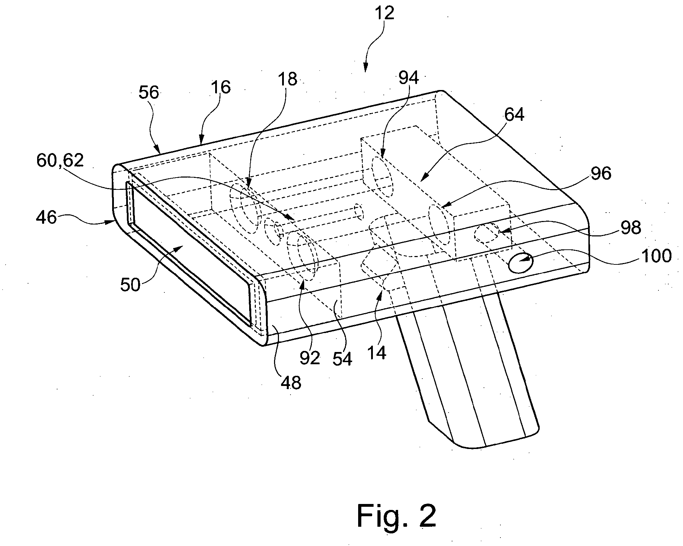

In der Fig. 2 ist der Adapter 12 in einer halbtransparenten, perspektivischen Ansicht dargestellt. Der in Fig. 2 dargestellte Adapter 12 ist eine von einer Vielzahl von möglichen Ausgestaltungsvarianten für den Adapter 12. Wie in der Fig. 2 dargestellt, weist der Adapter 12 bevorzugt einen Handgriff, auf. Der Griff ist mit dem Anschlussgehäuse 16 verbunden und/oder mit dem Anschlussgehäuse 16 integral ausgebildet. Außerdem ist in der Fig. ist eine alternative Variante der Führung 60 des Anschlussgehäuses 16 dargestellt. Dabei ist die Führung 60 von einer Führungsbohrung 62 in der zu der Zugangsöffnung 46 gegenüberliegenden Wand 56 ausgebildet. Der Gegenadapter 44 kann dazu einen Führungsstift (nicht dargestellt) aufweisen, der in die Führungsbohrung 62 einfasst, wenn der Gegenadapter 44 in den Aufnahmeraum 48 eingeschoben wird, so dass eine exakte Positionierung des Gegenadapters 44 relativ zu dem Adapter 12 bzw. dem Anschlussgehäuse 16 sichergestellt werden kann. Durch die exakte Positionierung des Gegenadapters 44 beim Einschieben in den Aufnahmeraum 48 wird gewährleistet, dass der erste Fluidanschluss 18 des Adapters 12 mit dem ersten Fluidgegenanschluss 58 des Gegenadapters 44 derart in Verbindung gebracht wird, dass eine Fluidverbindung zwischen dem ersten Fluidanschluss 18 und dem ersten Fluidgegenanschluss 58 sicher hergestellt wird.

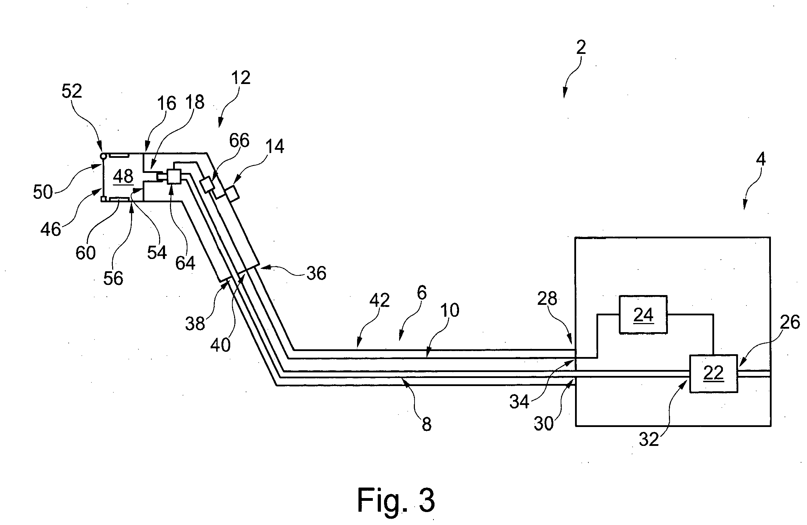

In der Fig. 3 ist eine vorteilhafte Ausgestaltung des Systems 2 dargestellt. Dabei wird auf die vorangegangenen Erläuterungen, vorteilhaften Ausgestaltungen, Effekte und/oder erläuterten Vorteile in analoger Weise Bezug genommen. Der Adapter 12 des Systems 2 weist ein steuerbares Fluidnebenventil 64 auf. Das Fluidnebenventil ist nach Art eines steuerbaren Fluidventils ausgebildet. Das Fluidnebenventil 64 ist zwischen dem ersten Fluidanschluss 18 und dem zweiten Ende 38 der ersten Fluidleitung 8 gekoppelt. Dazu kann der Adapter 12 eine weitere Fluidleitung aufweisen, die sich von dem zweiten Ende 38 der ersten Fluidleitung 8 zu einem Eingang des Fluidnebenventils 64 erstreckt. Ein Ausgang des Fluidnebenventils 64 kann unmittelbar mit dem ersten Fluidanschluss 18 gekoppelt sein. Alternativ ist es möglich, dass eine weitere Fluidleitung vorgesehen ist, die sich von dem Ausgang des Fluidnebenventils 64 zu dem ersten Fluidanschluss 18 erstreckt.

Darüber hinaus weist der Adapter 12 eine Steuereinheit, die als zweite Steuereinheit 66 bezeichnet wird, auf. Die zweite Steuereinheit 66 ist mittels einer Signalleitung mit dem Fluidnebenventil 64 verbunden, so dass das Fluidnebenventil 64 von der zweiten Steuereinheit 66 steuerbar ist. Dabei kann die zweite Steuereinheit 66 das Fluidnebenventil 64 derart steuern, dass das Fluidnebenventil 64 öffnet oder schließt. Außerdem ist die zweite Steuereinheit 64 zum Steuern des Fluidnebenventils 64 zumindest indirekt basierend auf einem von der Auslöseeinheit 14 hervorgerufenen Auslösesignals ausgebildet. Dabei kann die Auslöseeinheit 14 mittels einer weiteren Signalleitung mit der zweiten Steuereinheit 66 verbunden sein, um das Auslösesignal von der Auslöseeinheit 14 an die zweite Steuereinheit 66 zu übertragen. Wird die Auslöseeinheit 14 nun betätigt, wird von der Auslöseeinheit ein entsprechendes Auslösesignal hervorgerufen und an die zweite Steuereinheit 66 übertragen. Die zweite Steuereinheit 66 kann ein entsprechendes Signal an die erste Steuereinheit 24 übertragen, denn die zweite Steuereinheit 66 ist darüber hinaus bevorzugt mittels einer weiteren Signalleitung mit dem zweiten Ende 40 der ersten Signalleitung 10 verbunden. Basierend auf dem Auslösesignal kann die zweite Steuereinheit 66 das Fluidnebenventil 64 derart steuern, dass dieses beispielsweise öffnet. Da die erste Steuereinheit 24 des Kabinenmonuments 4 entsprechende Informationen erhalten hat, kann das Fluidhauptventil 22 des Kabinenmonuments 4 von der ersten Steuereinheit 24 derart gesteuert werden, dass auch das Fluidhauptventil 22 öffnet. Somit kann ein von einer Fluidsaugquelle bereitgestellter Unterdruck an dem ersten Fluidanschluss 18 angelegt werden. Auf entsprechende Erläuterungen, Effekte und Vorteile in diesem Zusammenhang wird auf die vorangegangenen Abschnitte verwiesen.

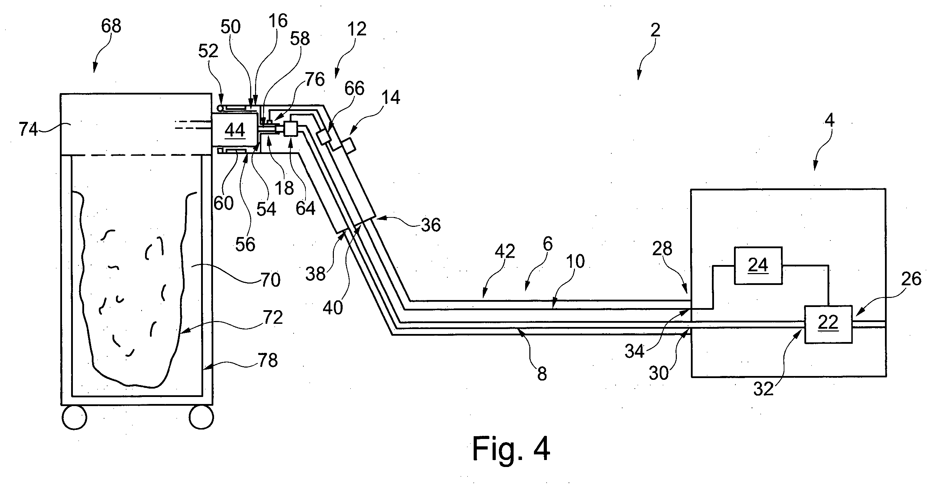

In der Fig. 4 ist eine weitere bevorzugte Ausgestaltungsvariante des Systems 2 gezeigt. Das System 2 kann dazu einen Trolley 68 aufweisen. Der Trolley 68 kann nach Art eines Wagens ausgebildet sein. Vorzugsweise weist der Trolley 68 Rollen an einer Unterseite auf, so dass der Trolley 68 geschoben und/oder gezogen werden kann. Der Trolley 68 dient zum Einsammeln von Abfall. Dazu weist der Trolley 68 einen Abfallbeutelaufnahmeraum 70 auf. In dem Abfallbeutelaufnahmeraum 70 kann ein Abfallbeutel 72, insbesondere ein auswechselbarer Abfallbeutel 72, zum Aufnehmen und/oder Einsammeln von Abfall angeordnet sein. Außerdem weist der Trolley 68 eine pneumatische Kompaktierungsvorrichtung 74 auf. Hiermit ist vorzugsweise gemeint, dass die Kompaktierungsvorrichtung 74 pneumatisch betätigbar und/oder steuerbar ist. Die Kompaktierungsvorrichtung 74 ist zumindest indirekt mit einem ersten Fluidgegenanschluss 58 des Trolleys 68 verbunden. Dazu kann der Trolley 68 den Gegenadapter 44 aufweisen, an dem der erste Fluidgegenanschluss 58 angeordnet ist. Somit kann sich eine Fluidverbindung von dem ersten Fluidgegenanschluss 58 zu der Kompaktierungsvorrichtung 74 erstrecken. Die Kompaktierungsvorrichtung 74 ist dazu ausgebildet, den Abfallbeutel 72 in dem Abfallbeutelaufnahmeraum 70 zu kompaktieren, insbesondere zu verdichten und/oder zusammenzudrücken, wenn die Kompaktierungsvorrichtung 74 mit einem Unterdruck versorgt wird. Um der Kompaktierungsvorrichtung 74 einen entsprechenden Unterdruck bereitzustellen, kann der Trolley 68 in die Nähe des Kabinenmonuments 4 gefahren werden. Daraufhin wird der Adapter 12 derart mit dem Gegenadapter 44 in Verbindung gebracht, dass der Gegenadapter 44 in den Aufnahmeraum 48 des Anschlussgehäuses 16 des Adapters 12 einfasst, und zwar in der Art, dass der erste Fluidgegenanschluss 58 mit dem ersten Fluidanschluss 18 in Fluidverbindung gebracht wird.

Außerdem ist es bevorzugt vorgesehen, dass der Adapter 12 einen Sensor 76 aufweist. Der Sensor 76 ist zur Erkennung einer vorbestimmten Anordnung des Fluidgegenanschlusses 58 in dem Aufnahmeraum 48 und/oder an dem ersten Fluidanschluss 18 des Adapters 12 ausgebildet. Der Sensor 76 ist mittels einer weiteren Signalverbindung mit der zweiten Steuereinheit 66 verbunden. Wird von dem Sensor 76 die zuvor genannte, vorbestimmte Anordnung des ersten Fluidgegenanschlusses 58 erkannt, sendet der Sensor ein entsprechendes Sensorsignal, das die vorbestimmte, erkannte Anordnung des ersten Fluidgegenanschlusses 58 repräsentiert, an die zweite Steuereinheit 66. Die zweite Steuereinheit 66 kann ein entsprechendes Signal an die erste Steuereinheit 24 senden, das ebenfalls die erkannte, vorbestimmte Anordnung des ersten Fluidgegenanschlusses 58 repräsentiert. Somit können beide Steuereinheiten 66, 24 die Information von dem Sensor 76 erhalten, dass der erste Fluidgegenanschluss 58 in einer vorbestimmten Anordnung in dem Aufnahmeraum 48 und/oder an dem ersten Fluidanschluss 18 ist. Dabei ist die erste Steuereinheit 24 vorzugsweise derart zum Steuern des Fluidhauptventils 22 ausgebildet, dass das Hauptventil 22 zumindest indirekt basierend auf dem Sensorsignal des Sensors 76, und vorzugsweise auf einem von der Auslöseeinheit 14 hervorgerufenen Auslösesignal, gesteuert wird. In analoger Weise ist die zweite Steuereinheit 66 vorzugsweise derart zum Steuern des Fluidnebenventils 64 ausgebildet, dass das Fluidnebenventil 64 basierend auf dem Sensorsignal des Sensors 76 und auf einem Auslösesignal der Auslöseeinheit 14 gesteuert wird. Ist der erste Fluidgegenanschluss 58 in der vorbestimmten Anordnung und wurde die Auslöseeinheit 14 betätigt, kann die erste Steuereinheit 24 das Hauptventil 22 und die zweite Steuereinheit 66 das Fluidnebenventil 64 öffnen, so dass ein von einer Fluidsaugquelle bereitgestellter Unterdruck an den ersten Fluidgegenanschluss 58 angelegt und somit auch der Kompaktierungsvorrichtung 74 des Trolleys 68 bereitgestellt wird. Sodann kann die Kompaktierung des Abfallbeutels 72, bzw. des darin gesammelten Abfalls, erfolgen.

Der in der Fig. 4 dargestellte Trolley 68 kann außerdem eine der Kompaktierungsvorrichtung 74 zugeordnete, elastisch formbare Kompaktierungshülle 78 aufweisen, die den Abfallbeutelaufnahmeraum 70 bildet. Wird der Kompaktierungsvorrichtung 74 ein Unterdruck bereitgestellt, so kann die Luft aus der Kompaktierungshülle 78 abgesaugt werden, so dass sich diese zusammenfaltet und dabei den Abfallbeutel 72, bzw. den darin gesammelten Abfall, verdichtet bzw. kompaktiert. Diese Ausgestaltung der Kompaktierungsvorrichtung 74 ist jedoch nur eine von vielen Möglichkeiten, um den Abfallbeutel 72 bzw. den darin gesammelten Abfall zu kompaktieren.

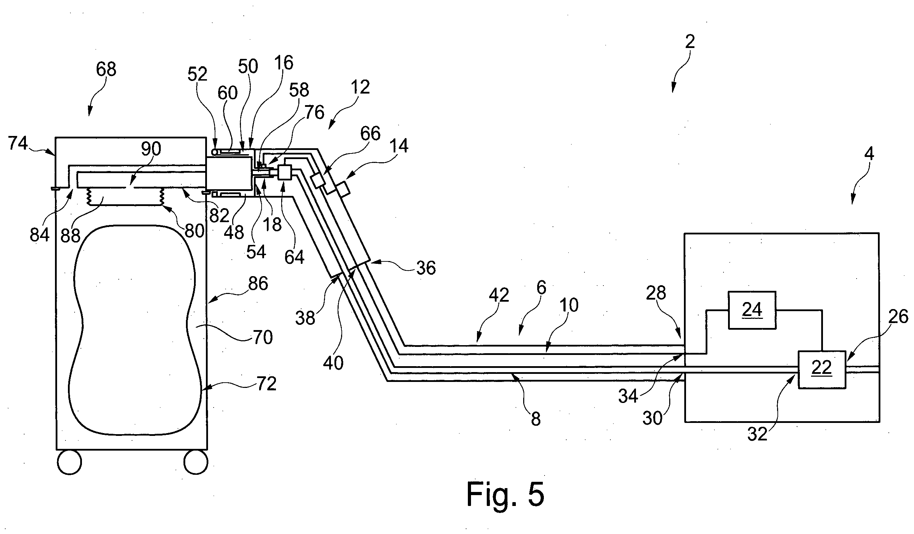

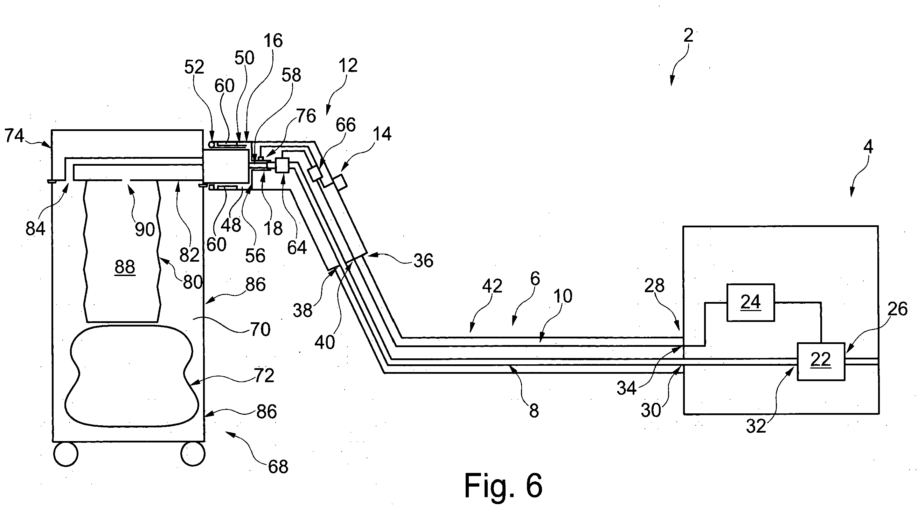

In der Fig. 5 ist eine weitere Ausgestaltung des Systems 2 schematisch dargestellt. Hierbei unterscheidet sich das System 2 im Wesentlichen durch die Ausgestaltung des Trolleys 68. Denn die Kompaktierungsvorrichtung 74 des Trolleys 68 weist einen pneumatisch aus- und einfahrbaren Faltenbalg 80 zum Kompaktieren des Abfallbeutels 72 auf. Der Faltenbalg 80 ist dabei an einer Unterseite eines von der Kompaktierungsvorrichtung 74 gebildeten Deckels 82 angeordnet. Der Deckel 82 weist einen Absaugkanal 84 auf, der durch eine Bohrung durch den Deckel 82 gebildet ist. Dabei ist die Bohrung radial außenseitig zu dem Faltenbalg 80 angeordnet. Außerdem ist der Deckel 84 zum Kompaktieren des Abfallbeutels derart mit einem Trolleygehäuse 86 des Trolleys 68 in Verbindung gebracht, dass der Deckel 82 den Abfallbeutelaufnahmeraum 70 bis auf den Absaugkanal 84 luftdicht abschließt. Der Absaugkanal 84 ist mittels einer Fluidleitung mit dem ersten Fluidgegenanschluss 58 verbunden. Wird nunmehr ein Unterdruck an den ersten Fluidgegenanschluss 58 angelegt, so liegt dieser Unterdruck auch an dem Absaugkanal 84 an, was ein Absaugen von Fluid, insbesondere Luft, aus dem Abfallbeutelaufnahmeraum 70 bewirkt. Ein Innenraum 88 des Faltenbalgs 80 ist durch einen weiteren Kanal 90 des Deckels 82 zumindest indirekt mit der Umgebungsluft verbunden. Durch das Absaugen von Fluid, insbesondere Luft, aus dem Abfallbeutelaufnahmeraum 70 wirkt auf den Faltenbalg 80 eine Kraft in Richtung des Abfallbeutels 72, so dass dieser mit dem Absaugen des Fluids, insbesondere Luft, aus dem Abfallbeutelaufnahmeraum 70 kompaktiert wird. In der Fig. 6 ist der entsprechend ausgefahrene Faltenbalg 80 dargestellt, so dass der Abfallbeutel 72 durch den ausgefahrenen Faltenbalg 80 kompaktiert ist.

Eine weitere vorteilhafte Ausgestaltung des Systems 2 soll im Zusammenhang mit der Fig. 2 erläutert werden. Die Fig. 2 zeigt den Adapter 12 in einer schematischen, halbtransparenten Darstellung. Dabei ist es vorgesehen, dass das Anschlussgehäuse 16 einen weiteren, zweiten Fluidanschluss 92 aufweist. Der zweite Fluidanschluss 92 ist zur Ankopplung an einen zweiten Fluidgegenanschluss (nicht dargestellt) ausgebildet. Der zweite Fluidgegenanschluss kann dem Gegenadapter 44 zugeordnet sein. Dabei ist der zweite Fluidanschluss 92 an der zu der Zugangsöffnung 46 gegenüberliegenden Wand 54 des Aufnahmeraums 48 angeordnet. Außerdem ist es bevorzugt vorgesehen, dass das Fluidnebenventil 64 nach Art eines 3/2-Wegeventils ausgebildet ist. Der erste Eingang (nicht dargestellt) des Fluidnebenventils 64 ist dabei zumindest indirekt mit dem zweiten Ende 38 der ersten Fluidleitung 8 fluidverbunden. Der erster Ausgang 94 des Fluidnebenventils 64 ist zumindest indirekt mit dem ersten Fluidanschluss 18 fluidverbunden. Ein zweiter Ausgang 96 des Fluidnebenventils 64 ist zumindest indirekt mit dem zweiten Fluidanschluss 92 fluidverbunden. Außerdem ist das Fluidnebenventil 64 derart, insbesondere von der zweiten Steuereinheit 66, steuerbar ausgebildet, dass der erste Eingang des Fluidnebenventils 64 wahlweise mit dem ersten Ausgang 94 oder dem zweiten Ausgang 92 gekoppelt werden kann. Somit kann ein an dem ersten Eingang des Fluidnebenventils 64 angelegtes Vakuum wahlweise an den ersten oder zweiten Ausgang 94, 96 bzw. an den ersten Fluidanschluss 18 oder den zweiten Fluidanschluss 94 angelegt werden. Weiterhin ist es bevorzugt vorgesehen, dass das Fluidnebenventil 64 einen zweiten Eingang 98 aufweist, der zumindest indirekt mit einem Entlüftungsanschluss 100 des Anschlussgehäuses 16 oder des Adapters 12 fluidverbunden ist. Dabei ist das Fluidnebenventil 64, insbesondere mittels der zweiten Steuereinheit 66, derart steuerbar ausgebildet, dass der zweite Eingang 98 des Fluidnebenventils 64 in umgekehrter Weise zu dem ersten Eingang des Fluidnebenventils 64 mit dem ersten oder dem zweiten Ausgang 94, 96 des Fluidnebenventils 64 gekoppelt wird. Das Fluidnebenventil 64 kann also bevorzugt nach Art eines 4/2-Wegeventils ausgebildet sein.

Weist der Gegenadapter 44 den zweiten Fluidgegenanschluss auf, kann der zweite Fluidgegenanschluss beispielsweise mit dem weiteren Kanal 90 der Kompaktierungsvorrichtung 74 in Fluidverbindung ausgebildet sein. Nachdem der Abfallbeutel 72 kompaktiert wurde, wie es in Fig. 6 beispielhaft dargestellt ist, kann das Fluidnebenventil 64 derart gesteuert werden, dass der erste Eingang des Fluidnebenventils 64 mit dem zweiten Ausgang des Fluidnebenventils und der zweite Eingang 98 des Fluidnebenventils 64 mit dem ersten Ausgang 94 des Fluidnebenventils 64 gekoppelt wird. In diesem Fall kann an den weiteren Kanal 90 ein entsprechender Unterdruck angelegt werden, so dass Luft aus dem Innenraum 88 des Faltenbalgs 80 abgesaugt wird. Dabei kann Umgebungsluft durch den Absaugkanal 84 in den Abfallbeutelaufnahmeraum 70 strömen. Durch das Absaugen der Luft aus dem Innenraum 88 des Faltenbalgs 80 wird dieser zusammengefahren, so dass der Faltenbalg 80 erneut die Stellung einnimmt, wie sie in der Fig. 5 beispielhaft dargestellt ist. Zusammenfassend lässt sich deshalb festhalten, dass der Faltenbalg 80 durch Steuerung des Fluidnebenventils 64 zwischen einer ausgefahrenen Stellung und einer eingefahrenen Stellung bewegbar ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. System (2) zum Absaugen eines Fluids, aufweisend:
- ein Kabinenmonument (4) für ein Fahrzeug,
- einen Schlauch (6) mit einer ersten Fluidleitung (8), und
- einen Adapter (12) mit einem Anschlussgehäuse (16), das einen ersten Fluidanschluss (18) aufweist, einem Handgriff und einer daran oder daneben angeordneten Auslöseeinheit (14),
wobei der erste Fluidanschluss (18) des Anschlussgehäuses (16) zur Ankopplung an einen ersten Fluidgegenanschluss (58) ausgebildet ist,
wobei das Kabinenmonument (4) ein steuerbares Fluidhauptventil (22) und eine erste Steuereinheit (24) zum Steuern des Fluidhauptventils (22) aufweist,
wobei ein erster Eingang (26) des Fluidhauptventils (22) zur zumindest indirekten Ankopplung an eine Fluidsaugquelle ausgebildet ist,
wobei ein erstes Ende (28) des Schlauchs (6) derart mit dem Kabinenmonument (4) verbunden ist, so dass ein entsprechendes erstes Ende (30) der ersten Fluidleitung (8) zumindest indirekt mit einem ersten Ausgang (32) des Fluidhauptventils (22) fluidverbunden ist,
wobei ein zweites Ende (36) des Schlauchs (6) derart mit dem Adapter (12) verbunden ist, so dass ein entsprechendes zweites Ende (38) der ersten Fluidleitung (8) zumindest indirekt mit dem ersten Fluidanschluss (18) fluidverbunden ist,
wobei die erste Steuereinheit (24) zum Steuern des Fluidhauptventils (22) zumindest indirekt basierend auf einem von der Auslöseeinheit (14) hervorgerufenen Auslösesignal ausgebildet ist.

2. System (2) nach Anspruch 1, wobei der Schlauch ferner eine erste Signalleitung (10) aufweist, wobei ein zu dem ersten Ende (28) des Schlauchs (6) zugehöriges erstes Ende (34) der ersten Signalleitung (10) zumindest indirekt mit der ersten Steuereinheit (24) signalverbunden ist und wobei ein dem zweiten Ende (36) des Schlauchs (6) entsprechendes zweites Ende (40) der ersten Signalleitung (10) zumindest indirekt mit der Auslöseeinheit (14) signalverbunden ist.

3. System (2) nach Anspruch 1 oder 2, **dadurch gekennzeichnet, dass** von dem Anschlussgehäuse (16) ein bis auf eine Zugangsöffnung (46) zumindest im Wesentlichen geschlossener Aufnahmeraum (48) ausgebildet ist, und der erste Fluidanschluss (18) an einer, insbesondere zu der Zugangsöffnung (46) gegenüberliegenden, Wand des Aufnahmeraums (48) angeordnet ist.

4. System (2) nach dem vorhergehenden Anspruch, **dadurch gekennzeichnet, dass** das Anschlussgehäuse (16) eine Führung (60), insbesondere mit mindestens einem Führungselement, mindestens einem Führungsstift und/oder mindestens einer Führungsbohrung, aufweist.

5. System (2) nach einem der vorhergehenden Ansprüche 3 bis 4, **dadurch gekennzeichnet, dass** der Zugangsöffnung (46) eine sich selbsttätig schließende Klappe (50) zugeordnet ist, die zwischen einer Öffnungsstellung und einer Schließstellung bewegbar, insbesondere verschwenkbar, ausgebildet ist.

6. System (2) nach einem der vorhergehenden Ansprüche, **dadurch gekennzeichnet, dass** der Adapter (12) ein steuerbares Fluidnebenventil (64) aufweist, das zwischen dem ersten Fluidanschluss (18) des Anschlussgehäuses (16) und dem zweiten Ende (38) der erste Fluidleitung (8) gekoppelt ist, und der Adapter (12) eine zweite Steuereinheit (66) zum Steuern des Fluidnebenventils (64) aufweist, wobei die zweite Steuereinheit (66) zum Steuern des Fluidnebenventils (64) zumindest indirekt basierend auf einem von der Auslöseeinheit (14) hervorgerufenen Auslösesignal ausgebildet ist.

7. System (2) nach einem der vorhergehenden Ansprüche 4 bis 6, **dadurch gekennzeichnet, dass** der Adapter (12) einen Sensor (76), der zur Erkennung einer vorbestimmten Anordnung eines Fluidgegenanschlusses (58) in dem Aufnahmeraum (48) und/oder an dem ersten Fluidanschluss (18) des Anschlussgehäuses (16) ausgebildet ist, aufweist, wobei die erste Steuereinheit (24) zum Steuern des Fluidhauptventils (22) und/oder die zweite Steuereinheit (66) zum Steuern des Fluidnebenventils (64) jeweils zumindest indirekt basierend auf einem Sensorsignal des Sensors (76) und auf einem von der Auslöseeinheit (14) hervorgerufenen Auslösesignal ausgebildet sind bzw. ist.

8. System (2) nach einem der vorhergehenden Ansprüche, **dadurch gekennzeichnet, dass** das Anschlussgehäuse (16) einen weiteren, zweiten Fluidanschluss (92) aufweist, der zweite Fluidanschluss (92) des Anschlussgehäuses (16) zur Ankopplung an einen zweiten Fluidgegenanschluss ausgebildet ist, der zweite Fluidanschluss (92) an der, insbesondere zu der Zugangsöffnung (46) gegenüberliegenden, Wand (54) des Aufnahmeraums (48) angeordnet ist, ein erster Eingang des Fluidnebenventils (64) zumindest indirekt mit dem zweiten Ende (38) der ersten Fluidleitung (8) fluidverbunden ist, ein erster Ausgang (94) des Fluidnebenventils (64) zumindest indirekt mit dem ersten Fluidanschluss (18) fluidverbunden ist, ein zweiter Ausgang (96) des Fluidnebenventils (64) zumindest indirekt mit dem zweiten Fluidanschluss (92) fluidverbunden ist, und das Fluidnebenventil (64) derart steuerbar ausgebildet ist, dass der erste Eingang des Fluidnebenventils (64) wahlweise mit dem ersten oder dem zweiten Ausgang (94, 96) des Fluidnebenventils (64) gekoppelt wird.

9. System (2) nach einem der vorhergehenden Ansprüche, **dadurch gekennzeichnet, dass** das Kabinenmonument (4) eine Aufnahmevorrichtung zur lösbaren Aufnahme des Adapters (12) aufweist.

10. System (2) nach einem der vorhergehenden Ansprüche, **dadurch gekennzeichnet, dass** das Kabinenmonument (4) eine Spülvorrichtung zum Spülen des Anschlussgehäuses (16), insbesondere des zugehörigen Aufnahmeraums (48), aufweist.

11. System (2) nach einem der vorhergehenden Ansprüche, **dadurch gekennzeichnet, dass** das Kabinenmonument (4) eine Schlauchrückholvorrichtung für den Schlauch (6) aufweist, die zum selbsttätigen Rückholen, insbesondere Aufwickeln, des Schlauchs (6) ausgebildet ist.

12. System (2) nach einem der vorhergehenden Ansprüche 8 bis 11, **dadurch gekennzeichnet, dass** das Fluidnebenventil (64) einen zweiten Eingang (98) aufweist, der zumindest indirekt mit einem Entlüftungsanschluss (100) des Adapters (12) fluidverbunden ist, und das Fluidnebenventil (64) derart steuerbar ausgebildet ist, dass der zweite Eingang (98) des Fluidnebenventils (64) in umgekehrter Weise zu dem ersten Eingang des Fluidnebenventils (64) mit dem ersten oder dem zweiten Ausgang (94, 96) des Fluidnebenventils (64) gekoppelt wird.

13. System (2) nach einem der vorhergehenden Ansprüche, **gekennzeichnet durch** einen Trolley (68) mit einer pneumatischen Kompaktierungsvorrichtung (74), wobei der Trolley (68) einen Abfallbeutelaufnahmeraum (70) aufweist, in dem ein Abfallbeutel (72) zum Einsammeln von Abfall angeordnet ist, und wobei der Trolley (68) den ersten Fluidgegenanschluss (58) aufweist, der zumindest indirekt mit der Kompaktierungsvorrichtung (74) fluidverbunden ist.

14. System (2) nach dem vorhergehenden Anspruch, **dadurch gekennzeichnet, dass** die Kompaktierungsvorrichtung (74) einen pneumatisch aus- und einfahrbaren Faltenbalg (80) zum Kompaktieren des Abfallbeutels (72) aufweist, wobei der Trolley (68) mittels Kompaktierungsvorrichtung (74) dazu ausgebildet ist, den Faltenbalg (80) zur Kompaktierung des Abfallbeutels (72) auszufahren, wenn ein Unterdruck an dem ersten Fluidgegenanschluss (58) anliegt.

15. System (2) nach dem vorhergehenden Anspruch, **dadurch gekennzeichnet, dass** der Trolley (68) den zweiten Fluidgegenanschluss aufweist, der zumindest indirekt mit einem Faltenbalginnenraum (88) des Faltenbalgs (80) fluidverbunden ist.

16. Fahrzeug, insbesondere Flugzeug, **dadurch gekennzeichnet, dass** das Fahrzeug ein System (2) nach einem der vorhergehenden Ansprüche aufweist.

## Claims

1. System (2) for extracting a fluid by suction, having:
- a cabin monument (4) for a vehicle,
- a hose (6) with a first fluid line (8), and
- an adaptor (12) with a connection housing (16) which has a first fluid connection (18), with a handle and with a trigger unit (14) arranged on or next to the latter,
wherein the first fluid connection (18) of the connection housing (16) is configured for coupling to a first fluid counterpart connection (58),
wherein the cabin monument (4) has a controllable fluid main valve (22) and a first control unit (24) for controlling the fluid main valve (22),
wherein a first inlet (26) of the fluid main valve (22) is configured for at least indirect coupling to a fluid suction source,
wherein a first end (28) of the hose (6) is connected to the cabin monument (4) in such a way that a corresponding first end (30) of the first fluid line (8) is fluidically connected at least indirectly to a first outlet (32) of the fluid main valve (22),
wherein a second end (36) of the hose (6) is connected to the adaptor (12) in such a way that a corresponding second end (38) of the first fluid line (8) is fluidically connected at least indirectly to the first fluid connection (18),
wherein the first control unit (24) is configured for controlling the fluid main valve (22) at least indirectly on the basis of a trigger signal brought about by the trigger unit (14).

2. System (2) according to Claim 1, wherein the hose furthermore has a first signal line (10), wherein a first end (34) of the first signal line (10), which is associated with the first end (28) of the hose (6), is signal-connected at least indirectly to the first control unit (24), and wherein a second end (40) of the first signal line (10), which corresponds to the second end (36) of the hose (6), is signal-connected at least indirectly to the trigger unit (14).

3. System (2) according to Claim 1 or 2, **characterized in that** a receiving space (48) which is closed at least substantially with the exception of an access opening (46) is formed by the connection housing (16), and the first fluid connection (18) is arranged on a wall of the receiving space (48), which wall is in particular situated opposite the access opening (46).

4. System (2) according to the preceding claim, **characterized in that** the connection housing (16) has a guide (60), in particular with at least one guide element, at least one guide pin and/or at least one guide bore.

5. System (2) according to either of preceding Claims 3 and 4, **characterized in that** the access opening (46) is assigned an automatically closing flap (50) which is configured to be movable, in particular pivotable, between an open position and a closed position.

6. System (2) according to one of the preceding claims, **characterized in that** the adaptor (12) has a controllable fluid secondary valve (64) which is coupled between the first fluid connection (18) of the connection housing (16) and the second end (38) of the first fluid line (8), and the adaptor (12) has a second control unit (66) for controlling the fluid secondary valve (64), wherein the second control unit (66) is configured for controlling the fluid secondary valve (64) at least indirectly on the basis of a trigger signal brought about by the trigger unit (14).

7. System (2) according to one of preceding Claims 4 to 6, **characterized in that** the adaptor (12) has a sensor (76) which is configured for detecting a predetermined arrangement of a fluid counterpart connection (58) in the receiving space (48) and/or at the first fluid connection (18) of the connection housing (16), wherein the first control unit (24) is configured for controlling the fluid main valve (22), and/or the second control unit (66) is configured for controlling the fluid secondary valve (64), in each case at least indirectly on the basis of a sensor signal of the sensor (76) and of a trigger signal brought about by the trigger unit (14).

8. System (2) according to one of the preceding claims, **characterized in that** the connection housing (16) has a further, second fluid connection (92), the second fluid connection (92) of the connection housing (16) is configured for coupling to a second fluid counterpart connection, the second fluid connection (92) is arranged on the wall (54) of the receiving space (48) that is in particular situated opposite the access opening (46), a first inlet of the fluid secondary valve (64) is fluidically connected at least indirectly to the second end (38) of the first fluid line (8), a first outlet (94) of the fluid secondary valve (64) is fluidically connected at least indirectly to the first fluid connection (18), a second outlet (96) of the fluid secondary valve (64) is fluidically connected at least indirectly to the second fluid connection (92), and the fluid secondary valve (64) is configured to be controllable in such a way that the first inlet of the fluid secondary valve (64) is coupled selectively to the first or the second outlet (94, 96) of the fluid secondary valve (64).

9. System (2) according to one of the preceding claims, **characterized in that** the cabin monument (4) has a receiving device for releasably receiving the adaptor (12) .

10. System (2) according to one of the preceding claims, **characterized in that** the cabin monument (4) has a flushing device for flushing the connection housing (16), in particular the associated receiving space (48).

11. System (2) according to one of the preceding claims, **characterized in that** the cabin monument (4) has a hose return device for the hose (6), which is configured for automatically returning, in particular winding up, the hose (6).

12. System (2) according to one of preceding Claims 8 to 11, **characterized in that** the fluid secondary valve (64) has a second inlet (98) which is fluidically connected at least indirectly to a venting connection (100) of the adaptor (12), and the fluid secondary valve (64) is configured to be controllable in such a way that the second inlet (98) of the fluid secondary valve (64) is coupled to the first or the second outlet (94, 96) of the fluid secondary valve (64) oppositely to the first inlet of the fluid secondary valve (64).

13. System (2) according to one of the preceding claims, **characterized by** a trolley (68) with a pneumatic compacting device (74), wherein the trolley (68) has a waste-bag-receiving space (70) in which a waste bag (72) for collecting waste is arranged, and wherein the trolley (68) has the first fluid counterpart connection (58), which is fluidically connected at least indirectly to the compacting device (74).

14. System (2) according to the preceding claim, **characterized in that** the compacting device (74) has a pneumatically extendable and retractable bellows (80) for compacting the waste bag (72), wherein the trolley (68) is configured, by means of the compacting device (74), to extend the bellows (80) for compacting the waste bag (72) when a negative pressure prevails at the first fluid counterpart connection (58).

15. System (2) according to the preceding claim, **characterized in that** the trolley (68) has the second fluid counterpart connection, which is fluidically connected at least indirectly to a bellows interior space (88) of the bellows (80).

16. Vehicle, in particular aircraft, **characterized in that** the vehicle has a system (2) according to one of the preceding claims.

## Revendications

1. Système (2) destiné à aspirer un fluide, ledit système comportant :
- un module de cabine (4) destiné à un véhicule,
- un tuyau (6) muni d'une première conduite de fluide (8), et
- un adaptateur (12) muni d'un boîtier de raccordement (16) qui comporte un premier raccord de fluide (18), une poignée et une unité de déclenchement (14) disposée dessus ou à côté,
le premier raccord de fluide (18) du boîtier de raccordement (16) étant conçu pour être accouplé à un premier raccord de fluide homologue (58),
le module de cabine (4) comportant une vanne de fluide principale commandable (22) et une première unité de commande (24) destinée à commander la vanne de fluide principale (22),
une première entrée (26) de la vanne de fluide principale (22) étant conçue pour s'accoupler au moins indirectement à une source d'aspiration de fluide,
une première extrémité (28) du tuyau (6) étant reliée au module de cabine (4) de sorte qu'une première extrémité correspondante (30) de la première conduite de fluide (8) soit au moins indirectement reliée fluidiquement à une première sortie (32) de la vanne de fluide principale (22),
une deuxième extrémité (36) du tuyau (6) étant reliée à l'adaptateur (12) de sorte qu'une deuxième extrémité correspondante (38) de la première conduite de fluide (8) soit au moins indirectement reliée fluidiquement au premier raccord de fluide (18),
la première unité de commande (24) étant conçue pour commander la vanne de fluide principale (22) au moins indirectement sur la base d'un signal de déclenchement généré par l'unité de déclenchement (14).

2. Système (2) selon la revendication 1, le tuyau comportant en outre une première ligne de signal (10), une première extrémité (34) de la première ligne de signal (10), associée à la première extrémité (28) du tuyau (6), étant au moins indirectement reliée par une liaison de signal à la première unité de commande (24) et une deuxième extrémité (40) de la première ligne de signal (10), correspondant à la deuxième extrémité (36) du tuyau (6), étant au moins indirectement reliée par une liaison de signal à l'unité de déclenchement (14).

3. Système (2) selon la revendication 1 ou 2, **caractérisé en ce qu'**un espace de réception (48), au moins sensiblement fermé à l'exception d'une ouverture d'accès (46), est formé par le boîtier de raccordement (16), et le premier raccord de fluide (18) est disposé sur une paroi de l'espace de réception (48) qui est en regard notamment de l'ouverture d'accès (46).

4. Système (2) selon la revendication précédente, **caractérisé en ce que** le boîtier de raccordement (16) comporte un guide (60), muni notamment d'au moins un élément de guidage, d'au moins une tige de guidage et/ou d'au moins un alésage de guidage.

5. Système (2) selon l'une des revendications précédentes 3 et 4, **caractérisé en ce que** l'ouverture d'accès (46) est associée à un volet à fermeture automatique (50) qui est mobile, notamment pivotant, entre une position ouverte et une position fermée.

6. Système (2) selon l'une des revendications précédentes, **caractérisé en ce que** l'adaptateur (12) comporte une vanne de fluide auxiliaire commandable (64) qui est accouplée entre le premier raccord de fluide (18) du boîtier de raccordement (16) et la deuxième extrémité (38) de la première conduite de fluide (8), et l'adaptateur (12) comporte une deuxième unité de commande (66) destinée à commander la vanne de fluide auxiliaire (64), la deuxième unité de commande (66) étant conçue pour commander la vanne de fluide auxiliaire (64) au moins indirectement sur la base d'un signal de déclenchement provoqué par l'unité de déclenchement (14).

7. Système (2) selon l'une des revendications précédentes 4 à 6, **caractérisé en ce que** l'adaptateur (12) comporte un capteur (76) qui est conçu pour détecter un agencement prédéterminé d'un raccord de fluide homologue (58) dans l'espace de réception (48) et/ou sur le premier raccord de fluide (18) du boîtier de raccordement (16), la première unité de commande (24) étant conçue pour commander la vanne de fluide principale (22) et/ou la deuxième unité de commande (66) étant conçue pour commander la vanne de fluide auxiliaire (64), à chaque fois au moins indirectement sur la base d'un signal du capteur (76) et d'un signal de déclenchement provoqué par l'unité de déclenchement (14).

8. Système (2) selon l'une des revendications précédentes, **caractérisé en ce que** le boîtier de raccordement (16) comporte un deuxième raccord de fluide supplémentaire (92), le deuxième raccord de fluide (92) du boîtier de raccordement (16) est conçu pour s'accoupler à un deuxième raccord de fluide homologue, le deuxième raccord de fluide (92) étant disposé au niveau d'une paroi (54) de l'espace de réception (48) qui est notamment en regard de l'ouverture d'accès (46), une première entrée de la vanne de fluide auxiliaire (64) est au moins indirectement reliée fluidiquement à la deuxième extrémité (38) de la première conduite de fluide (8), une première sortie (94) de la vanne de fluide auxiliaire (64) est au moins indirectement reliée fluidiquement au premier raccord de fluide (18), une deuxième sortie (96) de la vanne de fluide auxiliaire (64) est au moins indirectement reliée fluidiquement au deuxième raccord de fluide (92), et la vanne de fluide auxiliaire (64) est conçue pour être commandable de manière à ce que la première entrée de la vanne de -fluide auxiliaire (64) soit sélectivement accouplée à la première ou à la deuxième sortie (94, 96) de la vanne de fluide auxiliaire (64) .

9. Système (2) selon l'une quelconque des revendications précédentes, **caractérisé en ce que** le module de cabine (4) comporte un dispositif de réception destiné à recevoir de manière amovible l'adaptateur (12).

10. Système (2) selon l'une des revendications précédentes, **caractérisé en ce que** le module de cabine (4) comporte un dispositif de rinçage destiné à rincer le boîtier de raccordement (16), notamment l'espace de réception associé (48).

11. Système (2) selon l'une des revendications précédentes, **caractérisé en ce que** le module de cabine (4) comporte un dispositif de rappel du tuyau (6) qui est conçu pour rappeler automatiquement, notamment enrouler, le tuyau (6) .

12. Système (2) selon l'une des revendications précédentes 8 à 11, **caractérisé en ce que** la vanne de fluide auxiliaire (64) comporte une deuxième entrée (98) qui est au moins indirectement reliée fluidiquement à un raccord de ventilation (100) de l'adaptateur (12), et la vanne de fluide auxiliaire (64) est conçue pour être commandable de manière à ce que la deuxième entrée (98) de la vanne de fluide auxiliaire (64) est accouplée à la première ou la deuxième sortie (94, 96) de la vanne de fluide auxiliaire (64) de manière inverse par rapport à la première entrée de la vanne de fluide auxiliaire (64).

13. Système (2) selon l'une des revendications précédentes, **caractérisé par** un chariot (68) muni d'un dispositif de compactage pneumatique (74), le chariot (68) comportant un espace de réception de sac poubelle (70) dans lequel est disposé un sac poubelle (72) destiné à collecter les déchets, et le chariot (68) comportant le premier raccord de fluide homologue (58) qui est au moins indirectement relié fluidiquement au dispositif de compactage (74).

14. Système (2) selon la revendication précédente, **caractérisé en ce que** le dispositif de compactage (74) comporte un soufflet (80) extensible et rétractable pneumatiquement destiné à compacter le sac poubelle (72), le chariot (68) étant conçu pour étendre le soufflet (80) au moyen d'un dispositif de compactage (74) afin de compacter le sac poubelle (72) lorsqu'une pression négative est appliquée au premier raccord de fluide homologue (58) .

15. Système (2) selon la revendication précédente, **caractérisé en ce que** le chariot (68) comporte le deuxième raccord de fluide homologue qui est au moins indirectement relié fluidiquement à un espace intérieur (88) du soufflet (80).

16. Véhicule, notamment aéronef, **caractérisé en ce que** le véhicule comporte un système (2) selon l'une des revendications précédentes.
